# EUROPEAN PATENT APPLICATION

(11) **EP 4 617 334 A1**
(43) Date of publication of application: **17.09.2025**
(21) Application number: 25162805.3
(22) Date of filing: 11.03.2025
(51) Int. Cl.: C09D 11/36, C09D 11/328, C09D 11/103, C09D 11/102, C09D 11/38

(54) **INKJET INK**

(30) Priority: 12.03.2024 JP 2024038024
(71) Applicant: General Co., Ltd., Osaka 536-0005 (JP)
(72) Inventor: Takemoto, Hidehiro, Osaka-shi, 536-0005 (JP); Kitasaka, Jimpei, Osaka-shi, 536-0005 (JP)
(74) Representative: Witte, Weller & Partner Patentanwälte mbB

(57) **Abstract**

To provide an inkjet ink enabling both an excellent continuous printing performance and excellent fixing properties to be achieved.

[Solution Means] An inkjet ink includes a dye, at least one type of polyoxyethylene based compound selected from a group consisting of polyoxyethylene polyalkylene glycols, polyalkylene glycols, and polyoxyethylene alkyl ethers which has a number average molecular weight Mn of not less than 200, a phenol resin, and an organic solvent. The organic solvent contains a first solvent having a solubility parameter (SP value) of less than 11 and a second solvent that is an alcohol having a solubility parameter (SP value) of not less than 11, and a blending ratio of the first solvent with respect to a total amount of the organic solvent is not more than 20 mass %.

## Description

### [Technical Field]

The present invention relates to an inkjet ink.

### [Description of Related Art]

When, for example, characters, etc., are printed by an inkjet printing method on a surface of plastic or other printing object with non-absorbing properties, the printed characters, etc., are generally dried by heating.

Recently, solvent based inkjet inks such as Heatless Ink (registered trademark), etc., with which as the solvent, just an organic solvent is used or, water and an organic solvent are used in combination to impart quick drying properties to an ink and enable a heating drying step to be omitted have come into practical use.

Patent Literature 1 discloses an inkjet ink containing a metal chelating dye, a phenol resin having a softening point of not lower than 70°C and not higher than 125°C, a tackifier that is a terpene phenol resin having a hydroxyl value of 30 mg KOH/g, and an organic solvent which is an alcohol.

Patent Literature 2 discloses an inkjet ink containing a metal chelating dye, a polyoxyethylene based compound that is a PLURONIC (registered trademark) type surfactant having a number average molecular weight Mn of 1100, a tackifier that is a terpene phenol resin having a hydroxyl value of 60 mg KOH/g, a first solvent which is 3-methyl-2-butanone (SP value: 8.5), and a second solvent which is ethanol (SP value: 12.7).

### [PRIOR ART DOCUMENTS]

### [Patent Literature(s)]

[Patent Literature 1] Japanese Patent No. 6599972
[Patent Literature 2] Japanese Patent No. 7311411

### [SUMMARY OF THE INVENTION]

### [Problems to be Solved by the Invention]

In Patent Literature 1, a phenol resin is blended into an ink to improve fixing properties of the ink with respect to a surface of a nonporous printing object such as aluminum. Since the phenol resin in the ink is fixed to the printing object, the fixing properties of the ink can be improved, but it tends to be difficult to further improve continuous printing performance. This is because a blending amount of the phenol resin is relatively high in the ink of Patent Literature 1, and the resin easily solidifies in a head of an inkjet printer. The solidification of the resin in the head can be a cause of kogation in a head nozzle.

An ink of Patent Literature 2 does not contain a resin generally used as a binder resin such as a phenol resin, but contains a polyoxyethylene based compound instead of the resin. Since the polyoxyethylene based compound behaves as a surfactant, continuous printing performance can be improved (comparison between Examples 1 to 33 and Comparative Example 9 of Patent Literature 2), but the fixing properties tend to deteriorate. This is because, although the polyoxyethylene based compound functions also as a fixing component of the ink, it is unlikely for superior fixing properties as compared with a general binder resin to be exhibited.

In this respect, an object of the present invention is to provide an inkjet ink enabling both an excellent continuous printing performance and excellent fixing properties to be achieved.

Another object of the present invention is to provide an inkjet ink enabling decap performance to be improved even in long-term storage while maintaining an excellent quick drying property.

### [Means for Solving the Problems]

An inkjet ink according to an aspect of the present invention includes a dye, at least one type of polyoxyethylene based compound selected from a group consisting of polyoxyethylene polyalkylene glycols, polyalkylene glycols, and polyoxyethylene alkyl ethers which has a number average molecular weight Mn of not less than 200, a phenol resin, and an organic solvent.

In the inkjet ink according to an aspect of the present invention, the organic solvent includes a first solvent having a solubility parameter (SP value) of less than 11 and a second solvent that is an alcohol having a solubility parameter (SP value) of not less than 11, and a blending ratio of the first solvent with respect to a total amount of the organic solvent may be not more than 20 mass %.

In the inkjet ink according to the aspect of the present invention, the first solvent includes a solvent A having a relatively low flash point and a solvent B having a flash point relatively higher than the flash point of the solvent A, and a blending ratio of the solvent A with respect to a total amount of the first solvent may be higher than a blending ratio of the solvent B.

In the inkjet ink according to the aspect of the present invention, a flash point of the solvent A may be lower than 0°C, and a flash point of the solvent B may be not lower than 0°C.

In the inkjet ink according to the aspect of the present invention, the solvent A may be at least one type selected from a group consisting of 2-butanone (methyl ethyl ketone (MEK)〉, acetone (dimethyl ketone), and 3-methyl-2-butanone (methyl isopropyl ketone (MIPK)), and the solvent B may be at least one type selected from a group consisting of 1-methoxy-2-propanol (propylene glycol monomethyl ether (PM)), 2-ethoxyethanol (ethyl cellosolve (EGMEE)), and ethyl acetate (ethyl acetate).

The inkjet ink according to the aspect of the present invention may further include a tackifier that is at least one type selected from a group consisting of terpene phenol resins and rosin esters.

The inkjet ink according to the aspect of the present invention may further include a tackifier that is at least one type selected from a group consisting of terpene phenol resins having a hydroxyl value of not less than 30 mg KOH/g and not more than 70 mg KOH/g and rosin esters having an acid value of not less than 0.1 and not more than 20.

In the inkjet ink according to the aspect of the present invention, an amount of the tackifier may be not less than 1.5 mass % and not more than 4.5 mass % with respect to a total amount of the inkjet ink.

In the inkjet ink according to the aspect of the present invention, the polyoxyethylene based compound may have a number average molecular weight Mn of not less than 1000 and not more than 4000.

In the inkjet ink according to the aspect of the present invention, the polyoxyethylene based compound may be a polyoxyethylene polyalkylene glycol having a number average molecular weight Mn of not less than 200.

In the inkjet ink according to the aspect of the present invention, the phenol resin may have a softening point of not lower than 65°C and not higher than 125°C.

In the inkjet ink according to the aspect of the present invention, the dye may be a metal chelating dye, and an amount of the polyoxyethylene based compound may be not less than 5 mass % and not more than 50 mass % with respect to an amount of the metal chelating dye.

In the inkjet ink according to the aspect of the present invention, a total amount of the polyoxyethylene based compound and the phenol resin may be not less than 2 mass % and not more than 6 mass % with respect to a total amount of the inkjet ink, and an amount of the polyoxyethylene based compound may be not less than 35 mass % and not more than 75 mass % with respect to a total amount of the polyoxyethylene based compound and the phenol resin.

An inkjet ink according to another aspect of the present invention includes a metal chelating dye, a polyoxyethylene based compound constituted of a polyoxyethylene polyalkylene glycol having a number average molecular weight Mn of not less than 1000 and not more than 4000, a phenol resin, and an organic solvent, and an amount of the polyoxyethylene based compound is not less than 5 mass % and not more than 50 mass % with respect to an amount of the metal chelating dye and is not less than 35 mass % and not more than 75 mass % with respect to a total amount of the polyoxyethylene based compound and the phenol resin, the organic solvent includes a first solvent having a solubility parameter (SP value) of less than 11 and a second solvent that is an alcohol having a solubility parameter (SP value) of not less than 11, and the first solvent includes a solvent A having a relatively low flash point and a solvent B having a flash point of not lower than 0°C which is relatively higher than the flash point of the solvent A.

In the inkjet ink according to another aspect of the present invention, a blending ratio of the first solvent with respect to a total amount of the organic solvent may be not more than 20 mass %.

The inkjet ink according to another aspect of the present invention may further include a tackifier that is at least one type selected from a group consisting of terpene phenol resins having a hydroxyl value of not less than 30 mg KOH/g and not more than 70 mg KOH/g and rosin esters having an acid value of not less than 0.1 and not more than 20, and an amount of the tackifier may be not less than 1.5 mass % and not more than 4.5 mass % with respect to a total amount of the inkjet ink.

### [Advantageous Effects of the Invention]

According to the present invention, it is possible to provide an inkjet ink enabling both an excellent continuous printing performance and excellent fixing properties to be achieved.

### [Mode for Carrying Out the Invention]

In the following preferred embodiments, the term "dissolved" is defined as having transparency without precipitation, turbidity, etc., occurring when a substance has been put into a liquid and left for 24 hours after mixing. The term "compatible" is defined as a state in which dissolution is achieved with two or more kinds of substances. The term "fixing property" is defined as a fixing performance of an ink with respect to a printing object, and for example, having good or poor fixing properties can be evaluated by various fixing property confirmation tests such as a tape peeling test, an abrasion resistance test (fingertip abrasion resistance test, etc.), and an oil resistance test.

An inkjet ink of the present invention contains a dye, a polyoxyethylene based compound, a phenol resin, and an organic solvent.

### [Dye]

As the dye, various dyes that dissolve in an organic solvent can be used. More specifically, as the dye, various oil-soluble dyes that satisfactorily dissolve in both alcohols and ketones are used.

Of the oil-soluble dyes, metal chelating dyes are preferably used, and metal chelating dyes containing chromium as a main component are more preferably used. Since the metal chelating dye forms the structure where the polyoxyethylene based compound that is a fixing component is coordinated, the polyoxyethylene based compound is likely to precipitate or aggregate. As a result, the polyoxyethylene based compound can be firmly fixed to a surface of the printing object.

Although not restricted thereto, for example, one type or two or more types of the following various dyes can be cited as specific examples of the oil-soluble dyes.

### (Yellow)

Examples of yellow metal chelating dyes can include C.I. solvent yellow 19, 21, 25, 32, 41, 61, 62, 65, 79, 81, 82, 83, 83:1, 88, 89, 90, and 151; VALIFAST (registered trademark) YELLOW 3108, 3120, 3150, 3170, 3180, 4120, and 4121 manufactured by Orient Chemical Industries Co., Ltd.; Neo SuperColor Yellow C-131 manufactured by Chuo Synthetic Chemical Co., Ltd.; Oleosol (registered trademark) Fast Yellow 2G, GCN manufactured by Taoka Chemical Co., Ltd.; Orasol (registered trademark) Yellow 141, 152, 157, 190 manufactured by BASF Japan Ltd.; Intraplast Yellow 2GLN, 3R manufactured by Sensient Technologies Corp.; and Savinyl Yellow 2GLS01, RLS, RLSN, and 2RLS manufactured by Clariant AG.

Examples of other oil-soluble yellow dyes can include C.I. solvent yellow 2, 14, 15, 16, 56, 76, 80, and 91; AIZEN (registered trademark) S.B.N. Yellow 543 and, SPILON (registered trademark) Yellow CGNH and C-2GH manufactured by Hodogaya Chemical Co., Ltd.; Oplas (registered trademark) Yellow 140 and VALIFAST (registered trademark) YELLOW 1101, 1109, 1151, and 1171 manufactured by Orient Chemical Industries Co., Ltd.; Alcohol Yellow Y-10 and Oil Yellow CH manufactured by Chuo Synthetic Chemical Co., Ltd.; and DIARESIN (registered trademark) Yellow L3G manufactured by Mitsubishi Chemical Corporation.

### (Orange)

Examples of orange metal chelating dyes can include C.I. solvent orange 5, 6, 11, 20, 41, 54, 56, 58, 59, 62, and 99; VALIFAST (registered trademark) ORANGE 2210, 3208, 3209, and 3210 manufactured by Orient Chemical Industries Co., Ltd.; Neo Super Color Orange C-232 manufactured by Chuo Synthetic Chemical Co., Ltd.; Orasol Orange 245, 247, 251, and 272 manufactured by BASF Japan Ltd.; Intraplast Orange G and RLN manufactured by Sensient Technologies Corp.; and Savinyl Orange RLS and RLSE manufactured by Clariant AG.

Examples of other oil-soluble orange dyes can include C.I. solvent orange 1, 2, 14, 36, 44, 45, and 57; and VALIFAST (registered trademark) ORANGE 1201 manufactured by Orient Chemical Industries Co., Ltd.

### (Red)

Examples of red metal chelating dyes can include C.I. solvent red 8, 91, 99, 100, 102, 109, 118, 119, 122, 124, 125, 127, 130, 132, 142, 160, 218, and 233; VALIFAST (registered trademark) Red 2303, 2320, 3304, 3306, 3311, 3312, 3320, and PINK 2310N manufactured by Orient Chemical Industries Co., Ltd.; Neo Super Color RED C-431 and PINK C-331 manufactured by Chuo Synthetic Chemical Co., Ltd.; Oleosol Fast RED BL and PINK FB manufactured by Taoka Chemical Co., Ltd.; Orasol Red 5330, 335, 355, 363, 365, 385, 395, 471, and Pink 478 manufactured by BASF Japan Ltd.; Intraplast Red GC and Scarlet 3GL manufactured by Sensient Technologies Corp.; and Savinyl Red 3BLS, 3GLS, and Pink6BLS manufactured by Clariant AG.

Examples of other oil-soluble red dyes can include C.I. solvent red 1, 3, 23, 24, 25, 27, 35, 49, 78, 81, 82, 83, 84, 96, 121, 123, 128, 129, 131, 133, and 134, and C.I. disperse red 9; Orient Oil Pink OP, SPIRIT Red 102, and VALIFAST (registered trademark) Red 1308, 1320, 1355, 1364, and 1388 manufactured by Orient Chemical Industries Co., Ltd.; AIZEN SPILON Fiery Red BH, Red C-GH, C-BH, and Pink BH manufactured by Hodogaya Chemical Co., Ltd.; and AL Red2308 and Alcohol Pink P-30 manufactured by Chuo Synthetic Chemical Co., Ltd.

### (Brown)

Examples of brown metal chelating dyes can include C.I. solvent brown 37, 42, 43, and 44; Orasol Brown 324 and 326 manufactured by BASF Japan Ltd.; and Intraplast Brown GC manufactured by Sensient Technologies Corp.

Examples of other oil-soluble brown dyes can include C.I. solvent brown 3, 23, 24, 25, and 58.

### (Green)

Examples of oil-soluble green dyes can include C.I. solvent green 3, 16, 21, and 22; and VALIFAST (registered trademark) GREEN 1501 manufactured by Orient Chemical Industries Co., Ltd.

### (Blue)

Examples of blue metal chelating dye can include C.I. solvent blue 24, 25, 38, 44, 45, 55, 64, 67, and 70; VALIFAST (registered trademark) Blue 2606, 2620, and 2670 manufactured by Orient Chemical Industries Co., Ltd.; Neo Super Color Blue C-555 manufactured by Chuo Synthetic Chemical Co., Ltd.; Orasol Blue 825 and 855 manufactured by BASF Japan Ltd.; Intraplast Blue GN manufactured by Sensient Technologies Corp.; and Savinyl Blue RS and GLS manufactured by Clariant AG.

Examples of other oil-soluble blue dyes can include C.I. solvent blue 5, 11, 12, 46, 73, and 75; Orient Oil Blue603 and VALIFAST (registered trademark) Blue 1621, 1631, and 2604 manufactured by Orient Chemical Industries Co., Ltd.; AIZEN SPILON Blue C-RH, GNH, and S.P.T. Blue 121 manufactured by Hodogaya Chemical Co., Ltd.; and Alcohol Blue B-10 manufactured by Chuo Synthetic Chemical Co., Ltd.

### (Violet)

Examples of the oil-soluble violet dyes can include C.I. solvent violet 1, 2, 19, and 21; VALIFAST (registered trademark) VIOLET1701 and 1704 manufactured by Orient Chemical Industries Co., Ltd.; and AIZEN SPILON Violet C-RH and ECH manufactured by Hodogaya Chemical Co., Ltd.

### (Black)

Examples of black metal chelating dyes can include C.I. solvent black 22, 27, 28, 29, 34, 35, and 43; VALIFAST (registered trademark) BLACK 3804, 3807, 3808, 3810, 3820, 3830, 3840, 3866, 3870, 3877, and 3878 manufactured by Orient Chemical Industries Co., Ltd.; Orasol (registered trademark) Black X45, X51, and X55 manufactured by BASF Japan Ltd.; Intraplast Black CN and RLS manufactured by Sensient Technologies Corp.; and Savinyl Black RLSN01 manufactured by Clariant AG.

Examples of other oil-soluble black dyes can include C.I. solvent black 3, 5, 7, 23, 25, 30, 47, and 123; VALIFAST (registered trademark) BLACK 1807 and 1815 manufactured by Orient Chemical Industries Co., Ltd.; and RLS (solvent black 29) and CN (solvent black 28) manufactured by Instraplast.

One type or two or more types of oil-soluble dyes can be blended in, in appropriate amounts depending on a shade of color and color density of the inkjet ink. When the metal chelating dye is used as the oil-soluble dye, an amount of the metal chelating dye is not less than 5 mass %, and preferably not less than 7 mass % in a total amount of the inkjet ink. The amount of the metal chelating dye is, for example, not more than 15 mass %, preferably not more than 12 mass % in the total amount of the inkjet ink. The amount of the metal chelating dye is, for example, preferably not less than 5 mass % and not more than 15 mass %, and more preferably not less than 7 mass % and not more than 12 mass % in the total amount of the inkjet ink.

The amount of the above-mentioned dye is the amount of only one type of metal chelating dye when only one type of metal chelating dye is used, and is a sum amount of two or more types of metal chelating dyes when two or more types of metal chelating dyes are used in combination.

### [Polyoxyethylene Based Compound]

The polyoxyethylene based compound of the present invention contributes as, in an inkjet ink, a fixing component to a printing object.

As the polyoxyethylene based compound, various compounds of at least one type selected from a group consisting of polyoxyethylene alkylene glycols, polyalkylene glycols, and polyoxyethylene alkyl ethers which have a number average molecular weight Mn of not less than 200 are used. Although not restricted thereto, for example, one type or two or more types of the following various compounds can be cited as specific examples of the polyoxyethylene based compounds.

### (Polyoxyethylene Alkylene Glycol)

Examples of polyoxyethylene alkylene glycols may include polyoxyethylene polyoxypropylene glycols each being a block or random copolymer of ethylene oxide (EO) and propylene oxide (PO) (hereinafter abbreviated at times as "poloxamer" that is a synonym of a representative block copolymer), etc.

Examples of the poloxamer can include PE-61 〈POE (5) POP (30)〉, PE-62 〈POE (10) POP (30)〉, PE-71 (POE (5) POP (35)), PE-74 (POE (30) POP (35)), and PE-75 (POE (48) POP (35)) of the NEWPOL (registered trademark) PE series manufactured by Sanyo Chemical Industries, Ltd.; L-31 (POE (3) POP (17)), L-34 (POE (16) POP (17)), L-61 (POE (5) POP (30)), L-62 (POE (10) POP (30)), L-101 (POE (8) POP (55)), and L-121 (POE (10) POP (65)) of the ADEKA (registered trademark) PLURONIC (registered trademark) L series, F-68 〈POE (160) POP (30)〉, F-87 〈POE (120) POP (40)〉, and F-127 (POE (196) POP (67)) of the ADEKA (registered trademark) PLURONIC F series, and P-85 (POE (54) POP (39)) and P-123 (POE (42) POP (67)) of the ADEKA (registered trademark) PLURONIC P series manufactured by ADEKA Corporation; and P188 (POE (160) POP (30)) and P407 (POE (196) POP (67)) of the Kolliphor series and F68 (POE (160) POP(30)) and F127 (POE (196) POP (67)) of the Lutrol series manufactured by BASF Japan Ltd.

### (Polyalkylene Glycol)

Examples of polyalkylene glycols (PAG) may include polyethylene glycol (PEG), polypropylene glycol (PPG), polybutylene glycol (PBG), etc.

Examples of polyethylene glycols can include PEG-200 (number average molecular weight Mn: 200), PEG-300 (number average molecular weight Mn: 300), PEG-400 (number average molecular weight Mn: 400), PEG-600 (number average molecular weight Mn: 600), PEG-1000 (number average molecular weight Mn: 1000), PEG-1500 (number average molecular weight Mn: 570), PEG-1540 (number average molecular weight Mn: 1500), PEG-4000 (number average molecular weight Mn: 3000), PEG-6000 (number average molecular weight Mn: 8300), and PEG-20000 (number average molecular weight Mn: 20000) of the ADEKA (registered trademark) PEG series manufactured by ADEKA Corporation; and 200 (number average molecular weight Mn: 200), 300 (number average molecular weight Mn: 300), 400 (number average molecular weight Mn: 400), 600 (number average molecular weight Mn: 600), 1000 (number average molecular weight Mn: 1000), 1500 (number average molecular weight Mn: 570), 1540 (number average molecular weight Mn: 1500), 2000 (number average molecular weight Mn: 2000), 4000 (number average molecular weight Mn: 3000), 6000 (number average molecular weight Mn: 8300), etc., of the Toho polyethylene glycol series manufactured by TOHO Chemical Industry Co., Ltd.

Examples of polypropylene glycol can include PP-200 (number average molecular weight Mn: 200), PP-400 (number average molecular weight Mn: 400), PP-600 (number average molecular weight Mn: 600), PP-950 (number average molecular weight Mn: 950), PP-1000 (number average molecular weight Mn: 1000), PP-1200 (number average molecular weight Mn: 1200), PP-2000 (number average molecular weight Mn: 2000), PP-3000 (number average molecular weight Mn: 3000), PP-4000 (number average molecular weight Mn: 4000), GP-250 (number average molecular weight Mn: 250), GP-400 (number average molecular weight Mn: 400), GP-600 (number average molecular weight Mn: 600), GP-1000 (number average molecular weight Mn: 1000), and GP-1500 (number average molecular weight Mn: 1500), GP-3000 (number average molecular weight Mn: 3000), GP-4000 (number average molecular weight Mn: 4000) of the Sannix (registered trademark) series manufactured by Sanyo Chemical Industries, Ltd.; and PP-200 (number average molecular weight Mn: 200), PP-400 (number average molecular weight Mn: 400), PP-600 (number average molecular weight Mn: 600), PP-1000 (number average molecular weight Mn: 1000), PP-2000 (number average molecular weight Mn: 2000), PP-3000 (number average molecular weight Mn: 3000), PP-4000 (number average molecular weight Mn: 4000), etc., of the NEWPOL (registered trademark) series manufactured by Sanyo Chemical Industries, Ltd.

### (Polyoxyethylene Alkylene Ether)

Examples of polyoxyethylene alkylene ethers may include polyoxyethylene alkyl ethers, etc., having a structure in which a polyoxyethylene chain and an alkyl group are ether bonded (hereinafter, at times referred to as "alcohol ethoxylates" that is a synonym).

Examples of alcohol ethoxylates can include polyoxyethylene lauryl ether bridge 35 (number average molecular weight Mn: 1200) manufactured by Junsei Chemical Co., Ltd.; and DKS-NL15 (number average molecular weight Mn: 2900) manufactured by DKS Co., Ltd.

Of the substances described above, when the fixing properties with respect to the surface of the printing object are taken into consideration, polyoxyethylene alkylene glycols are preferably used, and polyoxyethylene propylene glycols are more preferably used.

The number average molecular weight Mn of the polyoxyethylene based compound is preferably not less than 600, and more preferably not less than 1000. The number average molecular weight Mn of the polyoxyethylene based compound is preferably not more than 5000, and more preferably not more than 4000. The number average molecular weight Mn of the polyoxyethylene based compound is preferably not less than 600 and not more than 5000, and more preferably not less than 1000 and not more than 4000.

When the number average molecular weight Mn of the polyoxyethylene based compound is less than 1000, film formability is sufficient, and the fixing properties with respect to the surface of the printing object deteriorate in some cases. When the number average molecular weight Mn of the polyoxyethylene based compound exceeds 4000, solubility in the inkjet ink deteriorates. For example, the polyoxyethylene based compound tends to easily precipitate during storage of the inkjet ink or easily cause kogation during printing. As a result, the decap performance deteriorates due to long-term storage in some cases. In addition, this causes stickiness after printing, and the quick drying property deteriorates in some cases.

Particularly preferable polyoxyethylene based compounds having the number average molecular weight Mn of not less than 1000 and not more than 4000 are not restricted thereto, and examples thereof can include L-31 (number average molecular weight Mn: 1100, POE content: 10%), L-61 (number average molecular weight Mn: 2000, POE content: 10%), L-62 (number average molecular weight Mn: 2500, POE content: 20%), and L-101 (number average molecular weight Mn: 3800, POE content: 10%) of the ADEKA (registered trademark) PLURONIC L series manufactured by ADEKA Corporation; PEG-1000 (number average molecular weight Mn: 1000), PEG-1540 (number average molecular weight Mn: 1500), and PEG-4000 (number average molecular weight Mn: 3000) of the ADEKA (registered trademark) PEG series manufactured by ADEKA Corporation; 1000 (number average molecular weight Mn: 1000), 1540 (number average molecular weight Mn: 1500), 2000 (number average molecular weight Mn: 2000), and 4000 (number average molecular weight Mn: 3000) of the Toho Polyethylene Glycol Series manufactured by TOHO Chemical Industry Co., Ltd.; Polyoxyethylene lauryl ether bridge 35 (number average molecular weight Mn: 1200) manufactured by Junsei Chemical Co., Ltd.; and DKS-NL15 (number average molecular weight Mn: 2900) manufactured by Junsei Chemical Co., Ltd. One type or two or more types of these polyoxyethylene based compounds can be used.

An amount of the polyoxyethylene based compound is, for example, not less than 3 mass %, and preferably not less than 5 mass % with respect to an amount of a dye. An amount of the polyoxyethylene based compound is, for example, not more than 60 mass %, and preferably not more than 55 mass % with respect to an amount of a dye. An amount of the polyoxyethylene based compound is, for example, preferably not less than 3 mass % and not more than 60 mass %, and more preferably not less than 5 mass % and not more than 50 mass % with respect to an amount of a metal chelating dye.

When the amount of the polyoxyethylene based compound is less than 5 mass % with respect to the amount of the metal chelating dye, it becomes difficult to form a complex with the metal chelating dye, and the fixing properties with respect to the surface of the printing object deteriorate in some cases. When the amount of the polyoxyethylene based compound exceeds 55 mass % with respect to the amount of the metal chelating dye, the compound is less likely to remain at an interface with the printing object, and the fixing properties with respect to the surface of the printing object deteriorate in some cases. In addition, the quick drying property deteriorates in some cases.

When a total amount of the polyoxyethylene based compound and the phenol resin (the total amount of the fixing components) is not less than 2 mass % and not more than 6 mass % with respect to a total amount of the inkjet ink, the amount of the polyoxyethylene based compound may be not less than 35 mass % and not more than 75 mass % with respect to the total amount of the fixing components.

When the amount of the polyoxyethylene based compound is less than 35 mass % of the total amount of the fixing components in the above-described condition, an absolute amount of the phenol resin is excessive, and this causes kogation and reduces the continuous printing performance in some cases. When the amount of the polyoxyethylene based compound exceeds 75 mass % of the total amount of the fixing components, the absolute amount of the phenol resin is small, and the fixing properties of the ink with respect to the printing object are insufficient.

### [Phenol Resin]

Examples of phenol resins can include various phenol resins having a softening point VT (°C) of not lower than 65°C and not higher than 130°C. Within the above-described range, the softening point VT (°C) of the phenol resins is preferably not lower than 65°C and not higher than 125°C, and more preferably not lower than 80°C and not higher than 120°C.

As long as the phenol resin is contained, fixing properties of the ink with respect to a nonporous base member (non-polar base member) are good. Examples of the nonporous base member (non-polar base member) can include oriented polypropylene (OPP: biaxially oriented polypropylene), cast polypropylene (CPP: non-oriented polypropylene), aluminum, PE, etc.

When the softening point VT (°C) of the phenol resin exceeds 130°C, solubility with respect to an organic solvent tends to be lowered, and therefore the lower softening point is preferable. A lower limit of the softening point VT (°C) of the phenol resin may be 65°C as described above, or may be lower than 65°C.

As the phenol resins, novolac resins which are thermoplastic resins are particularly preferable. As the phenol resins, two types of phenol resins having different softening points VT (°C), each having a softening point VT (°C) within the above-described range, may be used in combination.

An amount of the phenol resin is a remainder obtained by subtracting the amount of the polyoxyethylene based compound from the total amount of the inkjet ink. For example, the amount of the phenol resin is not less than 0.5 mass % and not more than 4 mass %, preferably not less than 0.75 mass % and not more than 3 mass %, and more preferably not less than 0.75 mass % and not more than 1.5 mass % with respect to the total amount of the inkjet ink.

An amount of a phenol resin is the amount of the phenol resin when only one phenol resin is blended in, and is a sum amount of two types of phenol resins when two types of phenol resins having different softening points are used in combination.

### [Organic Solvent]

An organic solvent preferably contains a first solvent and a second solvent having different solubility parameters (SP values). The "SP value" can be defined by, for example, either the Hildebrand solubility parameter or the Hansen solubility parameter. In this specification, the Hildebrand solubility parameter is defined as an "SP value," and the Hansen solubility parameter is defined as an "HSP value." When the term "SP value" is simply described in this specification, the SP value indicates the Hildebrand solubility parameter.

### (First Solvent)

As the first solvent, various solvents having the SP value of less than 11 are used. As the first solvent, various solvents of at least one type selected from a group consisting of ketones, ethers, esters, and acetals, and having the SP value of less than 11 are used.

Although not restricted thereto, for example, one type or two or more types of the following various ketones can be cited as specific examples of the ketones.

2-butanone (methyl ethyl ketone (MEK); number of carbon atoms: 4; SP value: 9.3; flash point: -5.6°C), acetone (dimethyl ketone; number of carbon atoms: 3; SP value: 10; flash point: -10°C), 2-pentanone (methyl propyl ketone (MPK); number of carbon atoms: 5; SP value: 8.7; flash point: 7.2°C), 3-pentanone (diethyl ketone (DEK); number of carbon atoms: 5; SP value: 8.8; flash point: 13°C), 3-methyl-2-butanone (methyl isopropyl ketone (MIPK); number of carbon atoms: 5; SP value: 8.5; flash point: -1.0°C), 2-methyl-4-pentanone (methyl isobutyl ketone (MIBK); number of carbon atoms: 6; SP value: 8.4; flash point: 3°C), 2,6-dimethyl-4-heptanone (diisobutyl ketone (DIBK); number of carbon atoms: 9;SP value: 7.8; flash point: 60°C), cyclohexanone (number of carbon atoms: 6; SP value: 9.3; flash point: 44°C), and 4-hydroxy-4-methyl-pentan-2-one (diacetone alcohol; number of carbon atoms: 6; SP value: 9.2; flash point: 58°C).

Although not restricted thereto, for example, one type or two or more types of the following various ethers can be cited as specific examples of the ethers.

1,4-dioxane (dioxane; SP value: 10; flash point: 15.6°C), diethyl ether (SP value: 7.4; flash point: -45°C), 1,1-dimethyldiethyl ether (diisopropyl ether; SP value: 6.9; flash point: -28°C), 2-ethoxyethanol (ethyl cellosolve (EGMEE); SP value: 10.5; flash point: 45°C), 2-butoxyethanol (butyl cellosolve (EGMBE); SP value: 9.5; flash point: 63°C), and methyl tert-butyl ether (MTBE; flash point: -28°C).

As the ether, a glycol ether can also be used.

Although not restricted thereto, for example, one type or two or more types of the following various glycol ethers, etc., can be cited as specific examples of the glycol ether.

1-methoxy-2-propanol (propylene glycol monomethyl ether (PM); SP value: 10.2; flash point: 32°C), 2-(2-methoxyethoxy)ethanol (methyl carbitol), 2-(2-ethoxyethoxy) ethanol (ethyl carbitol; SP value: 10.2), 2-(2-butoxyethoxy) ethanol (butyl carbitol; SP value: 10.2), 2-(2-(2-methoxyethoxy)ethoxy)ethanol (methyl triglycol), 1-butoxy-2-propanol (propylene glycol-1-monobutyl ether (PNB)), 3-methoxy-3-methyl-1-butanol (methyl methoxybutanol (MMB)), 2-〈2-(hexyloxy) ethoxy〉ethanol (hexyl diglycol), 1- (methoxy-2-propyl propanoate (methotate), and 1- or 2-(methoxymethylethoxy)propanol (dipropylene glycol monomethyl ether (DPM), isomer mixture).

Although not restricted thereto, for example, one type or two or more types of the following various esters, etc., can be cited as specific examples of an ester.

Ethyl acetate 〈 SP value: 9.1; flash point: 7.2°C), methyl acetate (SP value: 9.6), n-butyl acetate (SP value: 8.5; flash point: 22°C), sec-butyl acetate (SP value: 8.3), 3-methoxybutyl acetate (3-methoxybutyl acetate), pentyl ethanoate (amyl acetate; SP value: 8.5), propyl acetate (n-propyl acetate; SP value: 8.8), isopropyl ethanoate

(isopropyl acetate; SP value: 8.4), (R)-ethyl-2-hydroxypropanoate (ethyl lactate), methyl-2-hydroxypropanoate (methyl lactate), and butyl-2-hydroxypropanoate (butyl lactate).

As the ester, a glycol ester can also be used.

Although not restricted thereto, for example, one type or two or more types of the following various glycol esters, etc., can be cited as specific examples of the glycol ester.

1-acetoxy-2-ethoxyethane (ethylene glycol monoethyl ether acetate), 1-methoxy-2-propanyl acetate (propylene glycol monomethyl ether acetate (PGMEA)), 2-(2-butoxyethoxy) ethyl acetate (butyl carbitol acetate; SP value: 8.5), and 2-(2-ethoxyethoxy)ethyl acetate (ethyl carbitol acetate).

As the ester, an ester carbonate can also be used.

Although not restricted thereto, for example, one type or two or more types of the following various ester carbonates, etc., can be cited as specific examples of the ester carbonate.

Dimethyl carbonate (flash point: 17°C), diethyl carbonate (SP value: 8.8; flash point: 25°C), and ethyl methyl carbonate (SP value: 9.4, flash point: 23°C).

Although not restricted thereto, for example, one type or two or more types of the following various acetals such as dimethoxymethane 〈methylal; flash point: - 17.8°C〉 can be cited as specific examples of the acetals.

The first solvent is excellent in dissolving ability with respect to the metal chelating dye, the polyoxyethylene based compound, and the tackifier, and can thus satisfactorily dissolve these components. Hence, the dissolved metal chelating dye, etc., can be prevented effectively from precipitating during storage of the inkjet ink or causing kogation.

Preferably, as the first solvent, a solvent A having a relatively low flash point and a solvent B having a flash point relatively higher than the flash point of the solvent A are used in combination. More preferably, the solvent A having a flash point of lower than 0°C and the solvent B having a flash point of not lower than 0°C are used in combination.

A solvent having a low flash point has high volatility and can improve the quick drying property, but a solvent having an SP value of less than 11 also has dissolving ability with respect to the fixing component such as the resin. Therefore, if balance of the solvent is extremely changed due to volatilization in a fixing process, the dissolution of the fixing component cannot be maintained, and the fixing properties are insufficient in some cases. On the other hand, only a solvent having a high flash point is insufficient in quick drying property in some cases. Hence, the solvent A having a low flash point and the solvent B having a high flash point are preferably used in combination.

Of the first solvents described above, specific examples of the solvent A can include ketones with 3 to 5 carbon atoms, such as 2-butanone (methyl ethyl ketone (MEK); number of carbon atoms: 4; SP value: 9.3; flash point: - 5.6°C), acetone (dimethyl ketone; number of carbon atoms: 3; SP value: 10; flash point: -10°C), and 3-methyl-2-butanone (methyl isopropyl ketone (MIPK), number of carbon atoms: 5, SP value: 8.5, flash point: -1.0°C). The ketone that satisfies these ranges of the number of carbon atoms and the SP value is especially excellent in dissolving ability with respect to the metal chelating dye, the polyoxyethylene based compound, and the tackifier, and can thus further improve the effect of preventing these components from precipitating or causing kogation.

Of the first solvents described above, specific examples of the solvent B can include ethers and esters such as 1-methoxy-2-propanol (propylene glycol monomethyl ether (PM); SP value: 10.2; flash point: 32°C), 2-ethoxyethanol (ethyl cellosolve (EGMEE); SP value: 10.5; flash point: 45°C), and ethyl acetate (ethyl acetate; SP value: 9.1; flash point: 7.2°C).

Regarding blending amounts of the solvent A and the solvent B, a blending ratio of the solvent A with respect to a total amount of the first solvent is preferably higher than a blending ratio of the solvent B with respect to the total amount of the first solvent. More specifically, the blending ratio of the solvent A is preferably higher than 50 mass %, and more preferably not less than 60 mass %. The blending ratio of the solvent A is preferably not more than 95 mass %, and more preferably not more than 90 mass %. The blending ratio of the solvent A with respect to the total amount of the first solvent is preferably higher than 50 mass % and not more than 95 mass %, and more preferably not less than 60 mass % and not more than 90 mass %.

Since the first solvent has an SP value of less than 11, the first solvent is likely to damage a member, etc., constituting a printer head, and when the large amount of the first solvent is blended in, there is a concern that continuous printing performance may deteriorate. On the other hand, when the blending amount of the first solvent is small, dissolving ability with respect to the dye, the polyoxyethylene based compound, the phenol resin, and the tackifier is insufficient, and there is a concern that the dissolution stability of the ink may deteriorate. Hence, by setting the blending ratio of the solvent A within the above-described range, the first solvent can be easily volatilized to reduce head damage, and the solvent B can also be used in combination to maintain the dissolution stability of the ink.

### (Second Solvent)

As the second solvent to be used in combination with the first solvent, various solvents having an SP value of not less than 11 are used. As the second solvent, for example, an alcohol having the SP value of not less than 11 is used. The number of carbon atoms of the alcohol is, for example, 1 to 4, preferably 1 to 3.

Although not restricted thereto, for example, one type or two or more types of the following various alcohols, etc., can be cited as specific examples of such an alcohol.

Methanol (methyl alcohol; number of carbon atoms: 1; SP value: 14.5 to 14.8), ethanol (ethyl alcohol; number of carbon atoms: 2; SP value: 12.7), 1-propanol (propyl alcohol; number of carbon atoms: 3; SP value: 11.97), 2-propanol (isopropyl alcohol (IPA); number of carbon atoms: 3; SP value: 11.5), 1-butanol (butyl alcohol; number of carbon atoms: 4; SP value: 11.4), and 2-butanol (sec-butyl alcohol; number of carbon atoms: 4; SP value: 11).

These alcohols, especially when the inkjet ink is used in a thermal type inkjet printer and heated, volatilize and foam as a forming component of bubbles and function to form and discharge ink droplets of predetermined volume through a nozzle.

Also, by using these alcohols as the second solvent in combination, a material adaptability, that is, a material compatibility, of the inkjet ink with a member forming the head, etc., of the inkjet printer, etc., can be improved.

Also, in particular, the alcohols with 1 to 3 carbon atoms are lower in boiling point and higher in volatility in comparison to other alcohols besides these with an SP value not less than 11 and can thus further improve the quick drying property of the inkjet ink after printing.

Although it is preferable to use the alcohol with 1 to 3 carbon atoms solely (including a case where two or more types of alcohols with 1 to 3 carbon atoms are used in combination; the same applies hereinafter) as the second solvent, the alcohol with 1 to 3 carbon atoms may be used in combination with another alcohol besides the alcohol with 1 to 3 carbon atoms. However, in a case of combined use, an amount of the alcohol with 1 to 3 carbon atoms is preferably not less than 70 mass % in a total amount of the second solvent such as not to compromise the quick drying property of the inkjet ink. An upper limit of the alcohol with 1 to 3 carbon atoms is, from a standpoint of the quick drying property, 100 mass % in the total amount of the second solvent. That is, it is preferable for an entire amount of the second solvent to be the amount of the alcohol with 1 to 3 carbon atoms.

### (Regarding Amount of Solvent)

The blending ratio of the first solvent is preferably not more than 20 mass %, and more preferably not more than 18 mass % with respect to the total amount (a total amount of the organic solvent) of the first solvent and an alcohol as the second solvent. The blending ratio of the first solvent is preferably not less than 5 mass % with respect to the total amount of the organic solvent. The blending ratio of the first solvent is preferably not less than 5 mass % and not more than 20 mass %, and more preferably not less than 5 mass % and not more than 18 mass % with respect to the total amount of the organic solvent.

When the blending ratio of the first solvent is lower than 5 mass %, particularly dissolution of the tackifier is insufficient, and the dissolution stability deteriorates in some cases. As a result, aggregation products produced during continuous printing clog the nozzle, and the continuous printing performance also deteriorates in some cases.

If the blending ratio of the first solvent exceeds 20 mass %, the amount of the second solvent becomes low relatively and therefore, the material compatibility of the inkjet ink deteriorates, and various defects due to erosion and dissolution of a member constituting the head, etc., are caused in some cases. That is, if a member constituting the head, etc., becomes eroded or dissolved and becomes mixed into the inkjet ink and, for example, precipitates as an insoluble component inside the nozzle, the discharge of the inkjet ink becomes unstable and nozzle clogging is caused, and the continuous printing performance deteriorates in some cases. Also, in some cases, the insoluble component obstructs the discharge of the ink droplets such that a trajectory of the discharged ink droplets changes or chipping or blurring of a character, etc., is caused due to this change.

Further, in some cases, the precipitated insoluble component impedes a film of the tackifier from being formed on a liquid surface inside the nozzle during a decap time and becomes a cause of deterioration of the intermittent printing performance. Also, in some cases, the amount of the alcohol as the second solvent that functions as the forming component of bubbles upon being heated in use in a thermal type inkjet printer becomes insufficient such that, even when the inkjet ink is heated, bubbles cannot be satisfactory formed, and appropriate ink droplets cannot be discharged.

On the other hand, by setting the amount of the first solvent to be within the above-described range, the solubility of the metal chelating dye, etc., in the inkjet ink can be improved to satisfactorily prevent precipitation and kogation from occurring. Also, the material compatibility of the inkjet ink can be improved to satisfactorily prevent the occurrence of the various defects described above due to erosion and dissolution of a member constituting the head, etc. Further, when the inkjet ink is used in a thermal type inkjet printer and heated, bubbles can be satisfactorily formed and appropriate ink droplets can be discharged.

### [Tackifier]

The inkjet ink of the present invention may further contain a tackifier.

As the tackifier, at least one type of compound selected from a group consisting of terpene phenol resins and rosin esters is used.

The terpene phenol resins preferably have a hydroxyl value of not less than 30 mg KOH/g and not more than 70 mg KOH/g, and the rosin esters preferably have an acid value of not less than 0.1 and not more than 20.

When the terpene phenol resin has a hydroxyl value of less than 30 mg KOH/g or the rosin ester has an acid value of less than 0.1, polarity is not high, therefore the solubility with respect to both solvents of the first solvent and the second solvent is insufficient and the terpene phenol resin and the rosin ester is not satisfactorily dissolved in the inkjet ink in some cases. As a result, the stability of the ink, and eventually the continuous printing performance deteriorates in some cases. Therefore, in some cases, the discharge becomes unstable and the continuous printing performance deteriorates, or the intermittent printing performance is insufficient and the nozzle is easily clogged at the decap time.

On the other hand, when the terpene phenol resin has a hydroxyl value exceeding 70 mg KOH/g or the rosin ester has an acid value exceeding 20, the solubility of the terpene phenol resin and the rosin ester is poor with respect to an organic solvent and is high with respect to water. Therefore, the effect of improving the continuous printing performance and the intermittent printing performance cannot be obtained in some cases.

That is, since a tackifier having a hydroxyl value exceeding 70 mg KOH/g or an acid value exceeding 20 has high polarity, the resolubility of the tackifier with respect to an organic solvent (first solvent + second solvent) is insufficient, and the continuous printing performance deteriorates. However, since the tackifier is also high in solubility with respect to water, even when the inkjet ink is exposed to ambient air inside the nozzle and is in contact with moisture in the ambient air, the tackifier cannot precipitate rapidly on a liquid surface and form a satisfactory film capable of preventing the solvents from volatilizing.

Therefore, a viscosity of the inkjet ink thus increases during the decap time such as to easily cause clogging of the nozzle, and the intermittent printing performance deteriorates in some cases. Also, especially when the surface of the printing object is made of plastic, etc., that is nonporous and low in polarity, an adhesive property of a character, etc., tends to deteriorate easily. Moreover, a problem also arises in that tackifiers having a high hydroxyl value and a high acid value as described above are special, few in type, and restricted in choices of characteristics.

On the other hand, tackifiers having the hydroxyl value and the acid value within the ranges described above are numerous in type, are abundant in choices of characteristics, have appropriate solubilities that are neither too low nor too high in the two types of solvents of the first and second solvents differing in SP value, and can be satisfactorily dissolved in the inkjet ink.

Therefore, the continuous printing performance of the inkjet ink can be improved, the intermittent printing performance can be improved as well, and clogging of the nozzle during the decap time can also be made unlikely to be caused. Further, the adhesive property of a character, etc., can be secured sufficiently even on a surface of a printing object made of plastic, etc., having low polarity.

Here, a relationship between the tackifier and the first solvent (SP value < 11) will be described. The tackifier (terpene phenol resin) that is dissolved only in the second solvent (alcohol) has a high hydroxyl value of not less than 70 mg KOH/g and is easily compatible with water. Therefore, unless a blending amount of the tackifier is increased, an effect of addition of the tackifier is less likely to be exhibited. On the other hand, when the blending amount of the tackifier is excessive, the continuous printing performance deteriorates in some cases as in a case where the resin is used in an excessive amount.

Hence, by using the first solvent that can dissolve the tackifier having a low hydroxyl value and is compatible with the second solvent in combination, for example, a tackifier having a hydroxyl value in the range of not less than 30 mg KOH/g and not more than 60 mg KOH/g can be used. As a result, the blending amount of the tackifier can be reduced, and the continuous printing performance can be improved. Similarly, when the tackifier is the rosin ester, the tackifier having an acid value of not less than 100 is dissolved only in the second solvent (alcohol).

As the terpene phenol resins, various terpene phenol resins each being a copolymer of terpene and a phenol having a basic skeleton (C₅H₈)ₚ (where p is an integer) with isoprene bonded head-to-tail successively and having the hydroxyl value within the range described above can be used.

Although not restricted thereto, for example, the following various compounds can be cited as specific examples of the terpene phenol resins.

U115 (hydroxyl value: 30 mg KOH/g), T80 (hydroxyl value: 60 mg KOH/g), T100 (hydroxyl value: 60 mg KOH/g), T115 (hydroxyl value: 60 mg KOH/g), T130 (hydroxyl value: 60 mg KOH/g), and T145 (hydroxyl value: 60 mg KOH/g) of the YS Polyster series manufactured by Yasuhara Chemical Co., Ltd.

TP95 (hydroxyl value: 40 mg KOH/g), TP105 (hydroxyl value:40 mg KOH/g), and TP115 (hydroxyl value: 50 mg KOH/g), TP2040, TP2019, TP2040HM, 1095, 1105, and 1115 of the SyLVares (registered trademark) series manufactured by Kraton Corporation.

Also, as the rosin esters, various rosin esters each being an ester of a rosin mainly constituted of an abietene type or pimarene type resin acid that is a monobasic carboxylic acid with an alkylated hydrophenanthrene nucleus and an alcohol and having the acid value within the range described above can be used.

Examples of the rosin can include rosins made of resin acids containing an unsaturated bond, such as an abietic acid and a dextropimaric acid, hydrogenated rosins mainly made of a dihydroabietic acid or a tetrahydroabietic acid, etc., that is hydrogenated, and so forth. Also, examples of the alcohol can include glycerin, pentaerythritol, triethylene glycol, etc.

Although not restricted thereto, for example, the following various compounds, etc., can be cited as specific examples of the rosin esters.

SE-10 (rosin ester (hydrogenated); acid value: 2 to 10), FK100 (disproportionated rosin ester; acid value: not more than **5〉,** FK125 (disproportionated rosin ester; acid value: 14 to 20), F85 (rosin ester (hydrogenated); acid value: 4 to 12**〉,** PH (rosin ester (hydrogenated); acid value: 7 to 16**〉,** AQ-90A (special rosin resin; acid value: 100 to 110) of the HARITACK (registered trademark) series, MSR-4 (acid value: 120 to 150) and DS-70L (acid value: not more than 8**〉** of HARIESTER (registered trademark) series, and R-80 (acid value: not more than 20) of HARIMACK series manufactured by Harima Chemicals, Inc.; ESTER GUM (registered trademark) AA-G 〈rosin ester; acid value: 0.1 to 7.0〉, ESTER GUM (registered trademark) 105 (rosin ester; acid value: not more than 20**〉**, PENSEL (registered trademark) AZ (rosin ester; acid value: 35 to 50) manufactured by Arakawa Chemical Industries, Ltd.; and RE80HP, RE85GB, and RE100L of the SylValite (registered trademark) series manufactured by Kraton Corporation.

One type or two or more types of these tackifiers can be used.

An amount of the tackifier is, for example, not less than 0.5 mass %, and preferably not less than 1.5 mass % with respect to the total amount of the inkjet ink. The amount of the tackifier is, for example, not more than 5 mass %, and preferably not more than 4.5 mass %. The amount of the tackifier is, for example, preferably not less than 0.5 mass % and not more than 5 mass %, and more preferably not less than 1.5 mass % and not more than 4.5 mass % with respect to the total amount of the inkjet ink.

If the amount of the tackifier is below this range, a satisfactory film capable of sufficiently preventing the volatilization of the solvents is not formed when the inkjet ink is exposed to the ambient air inside the nozzle during the decap time, and the viscosity of the inkjet ink increases and the intermittent printing performance deteriorates in some cases. On the other hand, if the amount of the tackifier exceeds the range described above, the fixing properties and the continuous printing performance of a character, etc., deteriorate in some cases because the tackifier has almost no film formability. For example, when the amount of the tackifier is excessive, tackiness is produced, thus making it easy to peel off by adhesion of a tape in a tape peeling test which is an example of an index of the fixing properties. Also, when the viscosity of the inkjet ink is increased and the discharge becomes unstable, the continuous printing performance deteriorates or the kogation easily occurs in some cases.

On the other hand, by setting the amount of the tackifier within the above-described range, the intermittent printing performance of the inkjet ink can be further improved while the deterioration in the fixing properties, the alcohol resistance, and the continuous printing performance and the occurrence of kogation are prevented.

If two or more types of the tackifiers are to be used in combination, a sum amount of the tackifiers should be set within the range described above. For example, a combination of a terpene phenol resin and a rosin ester is also possible. In that case, a blending ratio of the terpene phenol resin and the rosin ester can be appropriately changed in accordance with the specifications.

### (Other Components)

In addition to the components described above, a binder resin may further be blended into the inkjet ink.

By blending the binder resin together with the polyoxyethylene based compound and the tackifier, the fixing properties of a character, etc., formed on a surface of especially a corona-treated OPP, etc., can be improved even further. However, the binder resin becomes a cause of kogation and is preferably restricted to a small amount even when the binder resin is blended in. Even by blending the binder resin by such a small amount, the fixing properties of a character, etc., can be improved by using the binder resin with the polyoxyethylene based compound and the tackifier in combination.

Specifically, an amount of the binder resin is preferably not more than 5 mass % and more preferably not more than 2 mass % with respect to the total amount of the inkjet ink. When prevention of the occurrence of kogation, etc., is taken into consideration, the amount of the binder resin is preferably 0 mass % even within the above-described range, that is, it is after all preferable for the binder resin not to be contained (but to be excluded).

The inkjet ink of the present invention that contains the components described above can be used in a drop-on-demand type inkjet printer. The inkjet ink can be used especially favorably in a drop-on-demand type inkjet printer of a thermal type.

### [EXAMPLES]

Although the present invention shall now be described based on examples and comparative examples, the arrangement of the present invention is not necessarily restricted to these examples.

### <Example 1>

The following components were blended in and thereafter filtered using a 5 µm membrane filter to prepare an inkjet ink.

### [Table 1]

**Table 1**

| Component | mass % |
|---|---|
| Colorant | 9 |
| Polyoxyethylene based compound | 2 |
| Phenol resin | 1 |
| First solvent (Solvent A) | 9 |
| First solvent (Solvent B) | 1 |
| Second solvent (Alcohol) | 74 |
| Tackifier | 3 |
| Surfactant | 1 |
| Total amount | 100 |

The components in the table are as follows.
Colorant: Metal chelating dye (VALIFAST (registered trademark) BLACK 3810 manufactured by Orient Chemical Industries Co., Ltd.)
Polyoxyethylene based compound: ADEKA (registered trademark) PLURONIC L-31 (poloxamer; POE (3) POP (17); number average molecular weight Mn: 1100, POE content: 10%) manufactured by ADEKA Corporation
Phenol resin: PHENOLITE (registered trademark) TD-2131 (novolac resin; softening point VT (°C) = 80°C) manufactured by DIC Corp.
First solvent (solvent A): 2-butanone (Methyl ethyl ketone (MEK); number of carbon atoms: 4; SP value: 9.3; flash point: -5.6°C)
First solvent (solvent B): 1-methoxy-2-propanol (propylene glycol monomethyl ether (PM); SP value: 10.2; flash point: 32°C)
Second solvent: Ethanol (ethyl alcohol; number of carbon atoms: 2; SP value: 12.7)
Tackifier: Terpene phenol resin (YS Polyster T80 manufactured by Yasuhara Chemical Co., Ltd.; hydroxyl value: 60 mg KOH/g)

### Surfactant: Silicone based surfactant

An amount of the polyoxyethylene based compound was 22.2 mass % with respect to an amount of the metal chelating dye. A blending ratio of the first solvent (first solvent/first solvent + second solvent) with respect to a total amount of organic solvents was 11.9 mass %. A blending ratio of the solvent A (flash point < 0°C) (solvent A/solvent A + solvent B) with respect to a total amount of the first solvent was 90 mass %.

### <Example 2>

Besides blending, in place of ADEKA (registered trademark) PLURONIC L-31, the same amount of ADEKA (registered trademark) PLURONIC L-61 (poloxamer; POE (5) POP (30); number average molecular weight Mn: 2000; POE content: 10%) manufactured by ADEKA Corporation as the polyoxyethylene based compound, an inkjet ink was prepared in the same manner as in Example 1.

### <Example 3>

Besides blending, in place of ADEKA (registered trademark) PLURONIC L-31, the same amount of ADEKA (registered trademark) PLURONIC L-101 (poloxamer; POE (8) POP (55); number average molecular weight Mn: 3800; POE content: 10%) manufactured by ADEKA Corporation as the polyoxyethylene based compound, an inkjet ink was prepared in the same manner as in Example 1.

### <Example 4>

Besides blending, in place of ADEKA (registered trademark) PLURONIC L-31, the same amount of ADEKA (registered trademark) PLURONIC L-121 (poloxamer; POE (10) POP (65); number average molecular weight Mn: 4500; POE content: 10%) manufactured by ADEKA Corporation as the polyoxyethylene based compound, an inkjet ink was prepared in the same manner as in Example 1.

### <Example 5>

Besides blending, in place of ADEKA (registered trademark) PLURONIC L-31, the same amount of Toho polyethylene glycol 2000 (polyethylene glycol; number average molecular weight Mn: 2000) manufactured by TOHO Chemical Industry Co., Ltd. as the polyoxyethylene based compound, an inkjet ink was prepared in the same manner as in Example 1.

### <Example 6>

Besides blending, in place of ADEKA (registered trademark) PLURONIC L-31, the same amount of ADEKA (registered trademark) PEG-1000 (polyethylene glycol; number average molecular weight Mn: 1000) manufactured by ADEKA Corporation as the polyoxyethylene based compound, an inkjet ink was prepared in the same manner as in Example 1.

### <Example 7>

Besides blending, in place of ADEKA (registered trademark) PLURONIC L-31, the same amount of ADEKA (registered trademark) PEG-600 (polyethylene glycol; number average molecular weight Mn: 600) manufactured by ADEKA Corporation as the polyoxyethylene based compound, an inkjet ink was prepared in the same manner as in Example 1.

### <Example 8>

Besides blending, in place of ADEKA (registered trademark) PLURONIC L-31, the same amount of ADEKA (registered trademark) PEG-400 (polyethylene glycol; number average molecular weight Mn: 400) manufactured by ADEKA Corporation as the polyoxyethylene based compound, an inkjet ink was prepared in the same manner as in Example 1.

### <Example 9>

Besides blending, in place of ADEKA (registered trademark) Pluronic L-31, the same amount of polyoxyethylene lauryl ether bridge 35 (alcohol ethoxylate; number average molecular weight Mn: 1200) manufactured by Junsei Chemical Co., Ltd. as the polyoxyethylene based compound, an inkjet ink was prepared in the same manner as in Example 1.

### <Example 10>

Besides blending, in place of ADEKA (registered trademark) Pluronic L-31, the same amount of DKS-NL15 (alcohol ethoxylate; number average molecular weight Mn: 2900) manufactured by DKS Co., Ltd. as the polyoxyethylene based compound, an inkjet ink was prepared in the same manner as in Example 1.

### <Comparative Example 1>

Besides blending, in place of ADEKA (registered trademark) PLURONIC L-31, the same amount of sorbitan lauryl ester (ADEKA (registered trademark) ESTOL S-20 manufactured by ADEKA Corporation) as the polyoxyethylene based compound, an inkjet ink was prepared in the same manner as in Example 1.

### <Example 11>

Besides blending, in place of PHENOLITE (registered trademark) TD-2131, the same amount of PHENOLITE (registered trademark) TD-2090 〈novolac resin; softening point VT (°C) = 120°C〉 manufactured by DIC Corp. as a phenol resin, an inkjet ink was prepared in the same manner as in Example 1.

### <Example 12>

Besides blending, in place of PHENOLITE (registered trademark) TD-2131, the same amount of PHENOLITE (registered trademark) BRG-564G 〈novolac resin; softening point VT (°C) = 65°C〉 manufactured by Showa Denko K.K. as a phenol resin, an inkjet ink was prepared in the same manner as in Example 1.

### <Example 13>

Besides blending, in place of PHENOLITE (registered trademark) TD-2131, the same amount of PHENOLITE (registered trademark) CKM-2432 (novolac resin; softening point VT (°C) = 130°C) manufactured by Showa Denko K.K. as a phenol resin, an inkjet ink was prepared in the same manner as in Example 1.

### <Comparative Example 2>

Besides blending, in place of PHENOLITE (registered trademark) TD-2131, the same amount of an acrylic resin (JONCRYL 682 manufactured by BASF Japan Ltd.) as a phenol resin, an inkjet ink was prepared in the same manner as in Example 1.

### <Example 14>

Besides blending, in place of ethanol, the same amount of 2-propanol (isopropyl alcohol (IPA); number of carbon atoms: 3; SP value: 11.5) as the second solvent, an inkjet ink was prepared in the same manner as in Example 1.

### <Example 15>

Besides blending, in place of ethanol, the same amount of 1-butanol (butyl alcohol; number of carbon atoms: 4; SP value: 11.4) as the second solvent, an inkjet ink was prepared in the same manner as in Example 1.

### <Example 16>

Besides blending, in place of methyl ethyl ketone (MEK), the same amount of 3-methyl-2-butanone (methyl isopropyl ketone (MIPK); number of carbon atoms: 5; SP value: 8.5; flash point: -1°C) as the first solvent (solvent A), an inkjet ink was prepared in the same manner as in Example 1.

### <Example 17>

Besides blending, in place of methyl ethyl ketone (MEK), the same amount of ethyl acetate (ethyl acetate; number of carbon atoms: 4; SP value: 9.1; flash point: 7.2°C) as the first solvent (solvent B), an inkjet ink was prepared in the same manner as in Example 1.

### <Example 18>

Besides using 9 mass % of 3-methyl-2-butanone (methyl isopropyl ketone (MIPK); number of carbon atoms: 5; SP value: 8.5; flash point: -1°C) which is the solvent A and 1 mass % of 2-ethoxyethanol (ethyl cellosolve (EGMEE); number of carbon atoms: 4; SP value: 10.5; flash point: 45°C) which is the solvent B in combination as the first solvent, an inkjet ink was prepared in the same manner as in Example 1.

### <Example 19>

Besides using 9 mass % of 2-butanone (methyl ethyl ketone (MEK); number of carbon atoms: 4; SP value: 9.3; flash point: -5.6°C) which is the solvent A and 1 mass % of 3-methyl-2-butanone (methyl isopropyl ketone (MIPK); number of carbon atoms: 5; SP value: 8.5; flash point: -1°C) which is the solvent A in combination as the first solvent, an inkjet ink was prepared in the same manner as in Example 1.

### <Example 20>

Besides using 9 mass % of ethyl acetate (ethyl acetate; number of carbon atoms: 4; SP value: 9.1; flash point: 7.2°C) which is the solvent B and 1 mass % of 2-ethoxyethanol (ethyl cellosolve (EGMEE); number of carbon atoms: 4; SP value: 10.5; flash point: 45°C) which is the solvent B in combination as the first solvent, an inkjet ink was prepared in the same manner as in Example 1. A blending ratio of the solvent A (flash point < 0°C) with respect to a total amount of the first solvent (solvent A/solvent A + solvent B) was 0 mass %.

### <Example 21>

Besides solely blending, instead of using methyl ethyl ketone (MEK) and propylene glycol monomethyl ether (PM) in combination, 10 mass % of 3-methyl-2-butanone (methyl isopropyl ketone (MIPK); number of carbon atoms: 5; SP value: 8.5; flash point: -1°C) which is the solvent A, as the first solvent, an inkjet ink was prepared in the same manner as in Example 1.

### <Example 22>

Besides solely blending, instead of using the first solvent and the second solvent in combination, 84 mass % of ethanol (ethyl alcohol; number of carbon atoms: 2; SP value: 12.7) which is the second solvent, as the organic solvent, and blending, in place of YS Polyster T80, the same amount of HARIESTER (registered trademark) MSR-4 (rosin ester; acid value: 120 to 150) manufactured by Harima Chemicals, Inc. as the tackifier, an inkjet ink was prepared in the same manner as in Example 1. A blending ratio of the first solvent (first solvent/first solvent + second solvent) with respect to a total amount of the organic solvent was 0 mass %.

### <Example 23>

besides solely blending, instead of using the first solvent and the second solvent in combination, 84 mass % of ethyl acetate (ethyl acetate; number of carbon atoms: 4; SP value: 9.1; flash point: 7.2°C) as the organic solvent, an inkjet ink was prepared in the same manner as in Example 1. A blending ratio of the first solvent (first solvent/first solvent + second solvent) with respect to a total amount of organic solvents was 100.0 mass %. A blending ratio of the solvent A (flash point < 0°C) with respect to a total amount of the first solvent (solvent A/solvent A + solvent B) was 0 mass %.

### <Example 24>

Besides blending, in place of the metal chelating dye, the same amount of an acid dye (VALIFAST BLACK 1807 manufactured by Orient Chemical Industries Co., Ltd.) as the colorant, an inkjet ink was prepared in the same manner as in Example 1.

### <Comparative Example 3>

Besides not blending in the polyoxyethylene based compound as a fixing component, an inkjet ink was prepared in the same manner as in Example 1. The amount of the polyoxyethylene based compound was 0 mass % with respect to the amount of the metal chelating dye.

### <Example 25>

Besides setting the blending amount of the polyoxyethylene based compound to 0.3 mass %, an inkjet ink was prepared in the same manner as in Example 1. The amount of the polyoxyethylene based compound was 3.3 mass % with respect to the amount of the metal chelating dye.

### <Example 26>

Besides setting the blending amount of the polyoxyethylene based compound to 0.5 mass %, an inkjet ink was prepared in the same manner as in Example 1. The amount of the polyoxyethylene based compound was 5.6 mass % with respect to the amount of the metal chelating dye.

### <Example 27>

Besides setting the blending amount of the polyoxyethylene based compound to 4.5 mass %, an inkjet ink was prepared in the same manner as in Example 1. The amount of the polyoxyethylene based compound was 50.0 mass % with respect to the amount of the metal chelating dye.

### <Example 28>

Besides setting the blending amount of the polyoxyethylene based compound to 5 mass %, an inkjet ink was prepared in the same manner as in Example 1. The amount of the polyoxyethylene based compound was 55.6 mass % with respect to the amount of the metal chelating dye.

### <Comparative Example 4>

Besides not blending in a phenol resin as a fixing component, an inkjet ink was prepared in the same manner as in Example 1.

### <Example 29>

Besides setting the blending amount of the phenol resin to 0.5 mass %, an inkjet ink was prepared in the same manner as in Example 1.

### <Example 30>

Besides setting the blending amount of the phenol resin to 0.75 mass %, an inkjet ink was prepared in the same manner as in Example 1.

### <Example 31>

Besides setting the blending amount of the phenol resin to 3 mass %, an inkjet ink was prepared in the same manner as in Example 1.

### <Example 32>

Besides setting the blending amount of the phenol resin to 4 mass %, an inkjet ink was prepared in the same manner as in Example 1.

### <Example 33>

Besides changing the blending amounts of the organic solvents to be 4.5 mass % of methyl ethyl ketone (MEK) which is the first solvent (solvent A), 0.5 mass % of propylene glycol monomethyl ether (PM) which is the first solvent (solvent B), and 79 mass % of ethanol which is the second solvent, an inkjet ink was prepared in the same manner as in Example 1. A blending ratio of the first solvent (first solvent/first solvent + second solvent) with respect to a total amount of organic solvents was 6.0 mass %. A blending ratio of the solvent A (flash point < 0°C) (solvent A/solvent A + solvent B) with respect to a total amount of the first solvent was 90 mass %.

### <Example 34>

Besides changing the blending amounts of the organic solvents to be 13.5 mass % of methyl ethyl ketone (MEK) which is the first solvent (solvent A), 1.5 mass % of propylene glycol monomethyl ether (PM) which is the first solvent (solvent B), and 69 mass % of ethanol which is the second solvent, an inkjet ink was prepared in the same manner as in Example 1. A blending ratio of the first solvent (first solvent/first solvent + second solvent) with respect to a total amount of organic solvents was 17.9 mass %. A blending ratio of the solvent A (flash point < 0°C) (solvent A/solvent A + solvent B) with respect to a total amount of the first solvent was 90 mass %.

### <Example 35>

Besides changing the blending amounts of the organic solvents to be 18 mass % of methyl ethyl ketone (MEK) which is the first solvent (solvent A), 2 mass % of propylene glycol monomethyl ether (PM) which is the first solvent (solvent B), and 64 mass % of ethanol which is the second solvent, an inkjet ink was prepared in the same manner as in Example 1. A blending ratio of the first solvent (first solvent/first solvent + second solvent) with respect to a total amount of organic solvents was 23.8 mass %. A blending ratio of the solvent A (flash point < 0°C) (solvent A/solvent A + solvent B) with respect to a total amount of the first solvent was 90 mass %.

### <Example 36>

Besides changing the blending amounts of the organic solvents to be 1 mass % of methyl ethyl ketone (MEK) which is the first solvent (solvent A), 9 mass % of propylene glycol monomethyl ether (PM) which is the first solvent (solvent B), and 74 mass % of ethanol which is the second solvent, an inkjet ink was prepared in the same manner as in Example 1. A blending ratio of the first solvent (first solvent/first solvent + second solvent) with respect to a total amount of organic solvents was 11.9 mass %. A blending ratio of the solvent A (flash point < 0°C) (solvent A/solvent A + solvent B) with respect to a total amount of the first solvent was 10 mass %.

### <Example 37>

Besides changing the blending amounts of the organic solvents to be 5 mass % of methyl ethyl ketone (MEK) which is the first solvent (solvent A), 5 mass % of propylene glycol monomethyl ether (PM) which is the first solvent (solvent B), and 74 mass % of ethanol which is the second solvent, an inkjet ink was prepared in the same manner as in Example 1. A blending ratio of the first solvent (first solvent/first solvent + second solvent) with respect to a total amount of organic solvents was 11.9 mass %. A blending ratio of the solvent A (flash point < 0°C) (solvent A/solvent A + solvent B) with respect to a total amount of the first solvent was 50 mass %.

### <Example 38>

Besides changing the blending amounts of the organic solvents to be 6 mass % of methyl ethyl ketone (MEK) which is the first solvent (solvent A), 4 mass % of propylene glycol monomethyl ether (PM) which is the first solvent (solvent B), and 74 mass % of ethanol which is the second solvent, an inkjet ink was prepared in the same manner as in Example 1. A blending ratio of the first solvent (first solvent/first solvent + second solvent) with respect to a total amount of organic solvents was 11.9 mass %. A blending ratio of the solvent A (flash point < 0°C) (solvent A/solvent A + solvent B) with respect to a total amount of the first solvent was 60 mass %.

### <Example 39>

Besides blending, in place of YS Polyster T80, the same amount of YS Polyster U115 (terpene phenol resin; hydroxyl value: 30 mg KOH/g) manufactured by Yasuhara Chemical Co., Ltd. as the tackifier, an inkjet ink was prepared in the same manner as in Example 1.

### <Example 40>

Besides blending, in place of YS Polyster T80, the same amount of SylVares TP115 (terpene phenol resin; hydroxyl value: 50 mg KOH/g) manufactured by Kraton Corporation as the tackifier, an inkjet ink was prepared in the same manner as in Example 1.

### <Example 41>

Besides blending, in place of YS Polyster T80, the same amount of YS Polyster S145 (terpene phenol resin; hydroxyl value: 100 mg KOH/g) manufactured by Yasuhara Chemical Co., Ltd. as the tackifier, an inkjet ink was prepared in the same manner as in Example 1.

### <Example 42>

Besides blending, in place of YS Polyster T80, the same amount of HARITACK (registered trademark) SE-10 (rosin ester (hydrogenated); acid value: 2 to 10) manufactured by Harima Chemicals, Inc. as the tackifier, an inkjet ink was prepared in the same manner as in Example 1.

### <Example 43>

Besides blending, in place of YS Polyster T80, the same amount of ESTER GUM (registered trademark) AA-G (rosin ester; acid value: 0.1 to 7.0) manufactured by Arakawa Chemical Industries, Ltd. as the tackifier, an inkjet ink was prepared in the same manner as in Example 1.

### <Example 44>

Besides blending, in place of YS Polyster T80, the same amount of ESTER GUM (registered trademark) 105 (rosin ester; acid value: not more than 20) manufactured by Arakawa Chemical Industries, Ltd. as the tackifier, an inkjet ink was prepared in the same manner as in Example 1.

### <Example 45>

Besides blending, in place of YS Polyster T80, the same amount of PENSEL (registered trademark) AZ 〈rosin ester; acid value: 35 to 50〉 manufactured by Arakawa Chemical Industries, Ltd. as the tackifier, an inkjet ink was prepared in the same manner as in Example 1.

### <Example 46>

Besides using 0.6 mass % of terpene phenol resin (YS Polyster T80 manufactured by Yasuhara Chemical Co., Ltd.; hydroxyl value: 60 mg KOH/g) and 2.4 mass % of rosin ester (HARITACK (registered trademark) SE-10 manufactured by Harima Chemicals, Inc.; acid value: 2 to 10) in combination as the tackifier, an inkjet ink was prepared in the same manner as in Example 1.

### <Example 47>

Besides using 1.5 mass % of terpene phenol resin (YS Polyster T80 manufactured by Yasuhara Chemical Co., Ltd.; hydroxyl value: 60 mg KOH/g) and 1.5 mass % of rosin ester (HARITACK (registered trademark) SE-10 manufactured by Harima Chemicals, Inc.; acid value: 2 to 10) in combination as the tackifier, an inkjet ink was prepared in the same manner as in Example 1.

### <Example 48>

Besides using 2.4 mass % of terpene phenol resin (YS Polyster T80 manufactured by Yasuhara Chemical Co., Ltd.; hydroxyl value: 60 mg KOH/g) and 0.6 mass % of rosin ester (HARITACK (registered trademark) SE-10 manufactured by Harima Chemicals, Inc.; acid value: 2 to 10) in combination as the tackifier, an inkjet ink was prepared in the same manner as in Example 1.

### <Example 49>

Besides not blending in the tackifier, an inkjet ink was prepared in the same manner as in Example 1.

### <Example 50>

Besides setting the blending amount of the tackifier to 1 mass %, an inkjet ink was prepared in the same manner as in Example 1.

### <Example 51>

Besides setting the blending amount of the tackifier to 2 mass %, an inkjet ink was prepared in the same manner as in Example 1.

### <Example 52>

Besides setting the blending amount of the tackifier to 4 mass %, an inkjet ink was prepared in the same manner as in Example 1.

### <Example 53>

Besides setting the blending amount of the tackifier to 5 mass %, an inkjet ink was prepared in the same manner as in Example 1.

### [Evaluation Method]

### <Continuous Printing Performance Test>

Using a drop-on-demand type inkjet printer of a thermal type, alphabets A to F having a font size of 8.5 pt were printed continuously at a resolution of 300 × 300 dpi on a surface of a corona-treated OPP with each of the inkjet inks prepared in Examples and Comparative Examples.

Next, printed alphabet images were observed, the number of times of printing during which chipping or omission due to a discharge defect of the inkjet ink caused mainly by kogation, etc., did not occur was recorded and the continuous printing performance was evaluated in accordance with the following standards.
∘: Not less than 40,000 times.
△: Not less than 20,000 times but less than 40,000 times.
×: Less than 20,000 times.

### <Tape Peeling Test>

Using the same inkjet printer as that used in the continuous printing performance test, a barcode having a size of 0.2 pt (line width: 0.07 mm) was printed on a surface of a corona-treated OPP with each of the inkjet inks prepared in Examples and Comparative Examples.

Next, a Scotch Brand tape "BK-24 ultra-transparent tape S" and a "SEKISUI Cellophane tape (registered trademark) No. 252" manufactured by SEKISUI CHEMICAL CO., LTD. were individually stuck on the printed barcode, a load of 2 kg was applied to each tape, and then a 90° peeling test was performed. The fixing properties were evaluated in accordance with the following standards from a printing residue after the tape was peeled off.

∘: No change was observed in printing even after peeling of the tape manufactured by SEKISUI CHEMICAL CO., LTD.
△: The printing becomes thin after peeling of the tape manufactured by SEKISUI CHEMICAL CO., LTD., but no change was observed in the printing after peeling of the Scotch Brand tape.
△△: The printing became thinner after peeling off the Scotch Brand tape.
×: After the Scotch Brand tape was peeled off, a part of the printing was missing.

### <Quick Drying Property Test>

Using the same inkjet printer as that used in the continuous printing performance test, a character having a font size of approximately 8.5 pt was printed at a resolution of 300 × 300 dpi on a surface of a corona-treated OPP with each of the inkjet inks prepared in Examples and Comparative Examples.

Next, the printed character was dried for a certain time until the character does not become removed even when rubbed with a cotton swab, the time required for this was recorded, and the quick drying property was evaluated in accordance with the following standards.
∘: Shorter than 10 seconds.
△: Not shorter than 10 seconds but shorter than 15 seconds.
×: Not shorter than 15 seconds.

### <Intermittent Printing Performance Test>

Using the same inkjet printer as that used in the continuous printing performance test, a character having a font size of approximately 8.5 pt was printed at a resolution of 300 × 300 dpi on a surface of a corona-treated OPP with each of the inkjet inks prepared in Examples and Comparative Examples.

Next, the inkjet printer was left to stand in a decapped state for a certain time under an environment of room temperature and low humidity (25°C and 30%) and the standing time after which when printing is performed again, a clear character without blur, etc., could be printed was recorded. The intermittent printing performance was evaluated in accordance with the following standards.
∘: Clear printing could be performed even when the decap time was not shorter than 10 minutes.
△: Clear printing could be performed even when the decap time was not shorter than 5 minutes.
△△: Clear printing could be performed with the decap time of not shorter than 1 minute and shorter than 5 minutes.
×: Clear printing could not be performed unless the decap time was shorter than 1 minute.

<Long-Term Storage Intermittent Printing Performance>

Each of the inkjet inks prepared in Examples and Comparative Examples was put in an ink cartridge for a drop-on-demand type inkjet printer of a thermal type, and stored in a heating chamber (about 45°C) for a certain period of time. After storage, the ink cartridge was taken out and subjected to the intermittent printing performance test, and the long-term storage intermittent printing performance was evaluated in accordance with the following standards.
∘: The same decap time continued for not shorter than 6 weeks.
△: The same decap time continued to the 5th week.
△△: The same decap time continued to the fourth week, but degradation was observed by the fifth week.
×: Degradation of the decap time was observed by the third week.

The results of the above are shown in Tables 2 to 12. In each Table, the signs in the columns of the types of polyoxyethylene (POE) based compounds are as follows.
PLX: Poloxamer (polyoxyethylene polyalkylene glycol)
PEG: Polyethylene glycol (polyalkylene glycol)
AE: alcohol ethoxylate (polyoxyethylene alkyl ether)

In each Table, the signs in the column of the types of organic solvents are as follows.
MEK: 2-butanone (methyl ethyl ketone)
MIPK:3-methyl-2-butanone (methyl isopropyl ketone)
PM: 1-methoxy-2-propanol (propylene glycol monomethyl ether)

In each Table, the signs in the column of the types of tackifiers are as follows.
Tp: terpene phenol resin
Ro: rosin ester resin

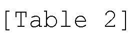

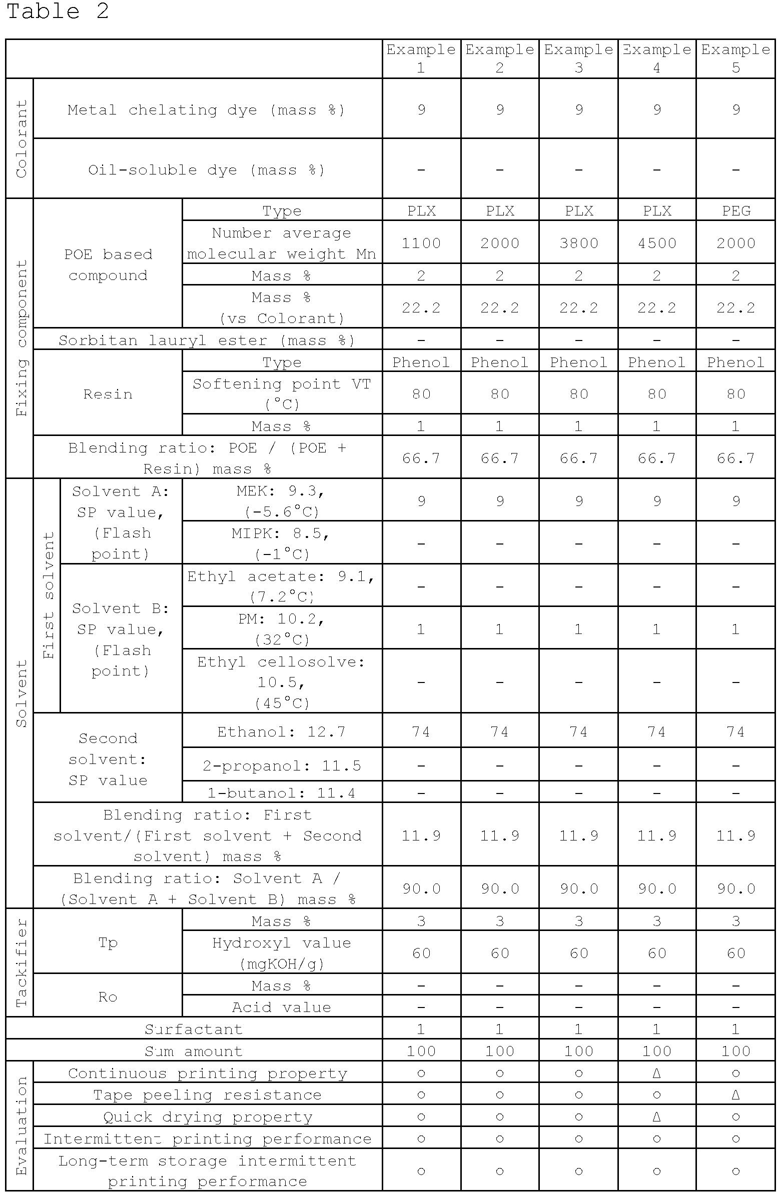

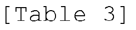

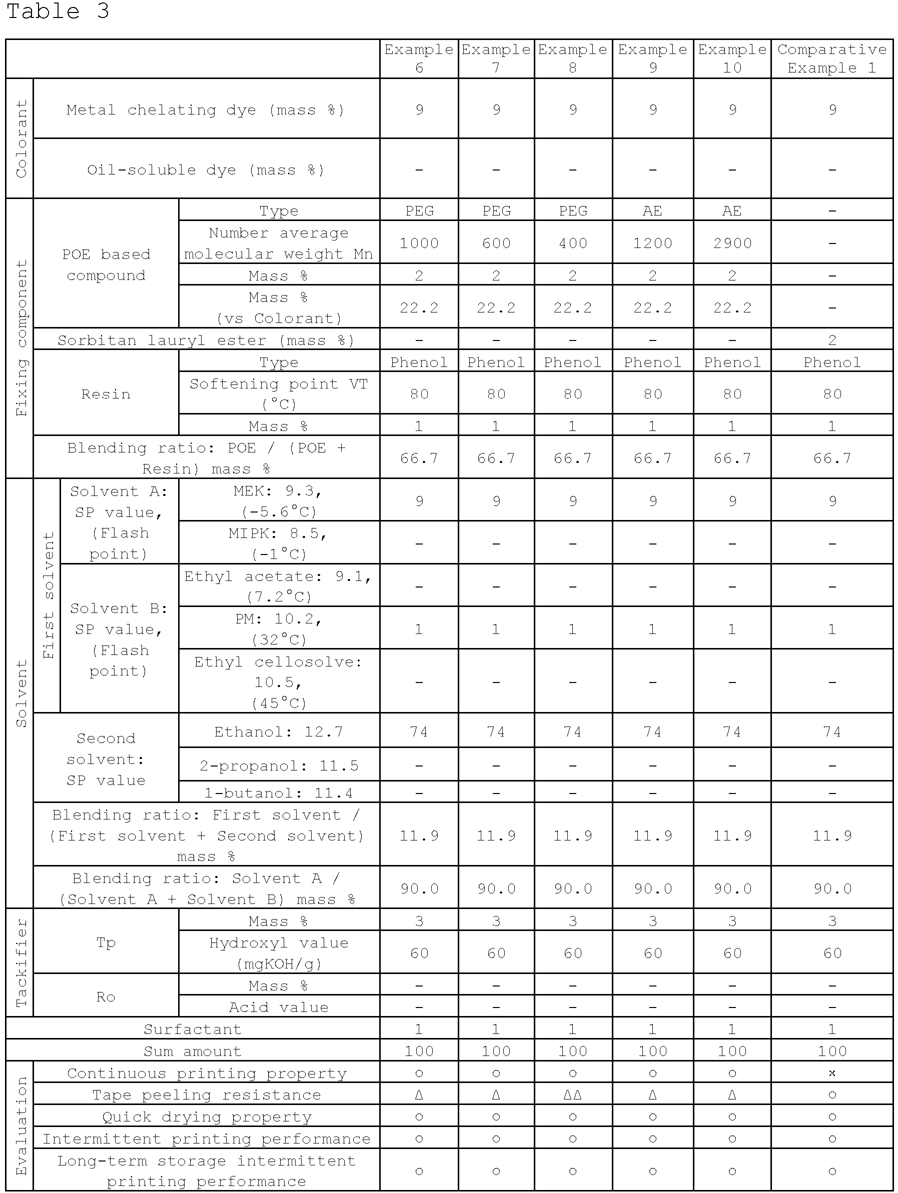

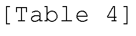

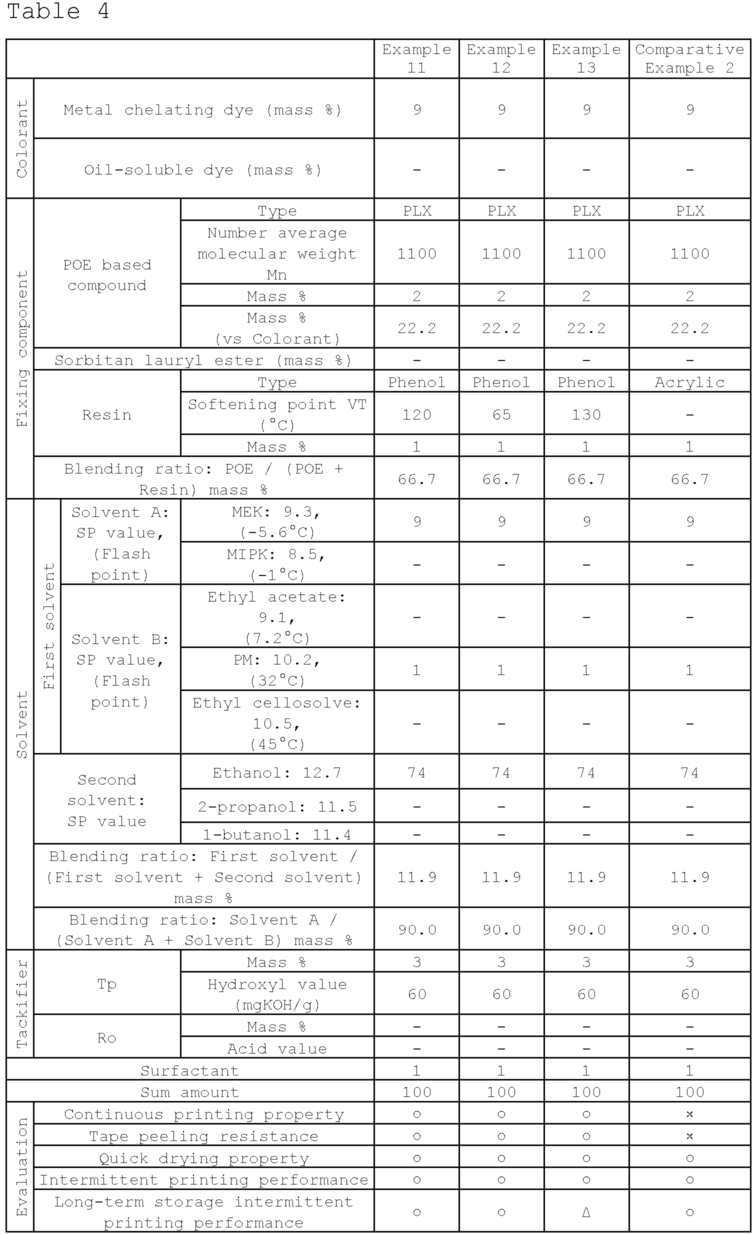

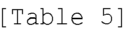

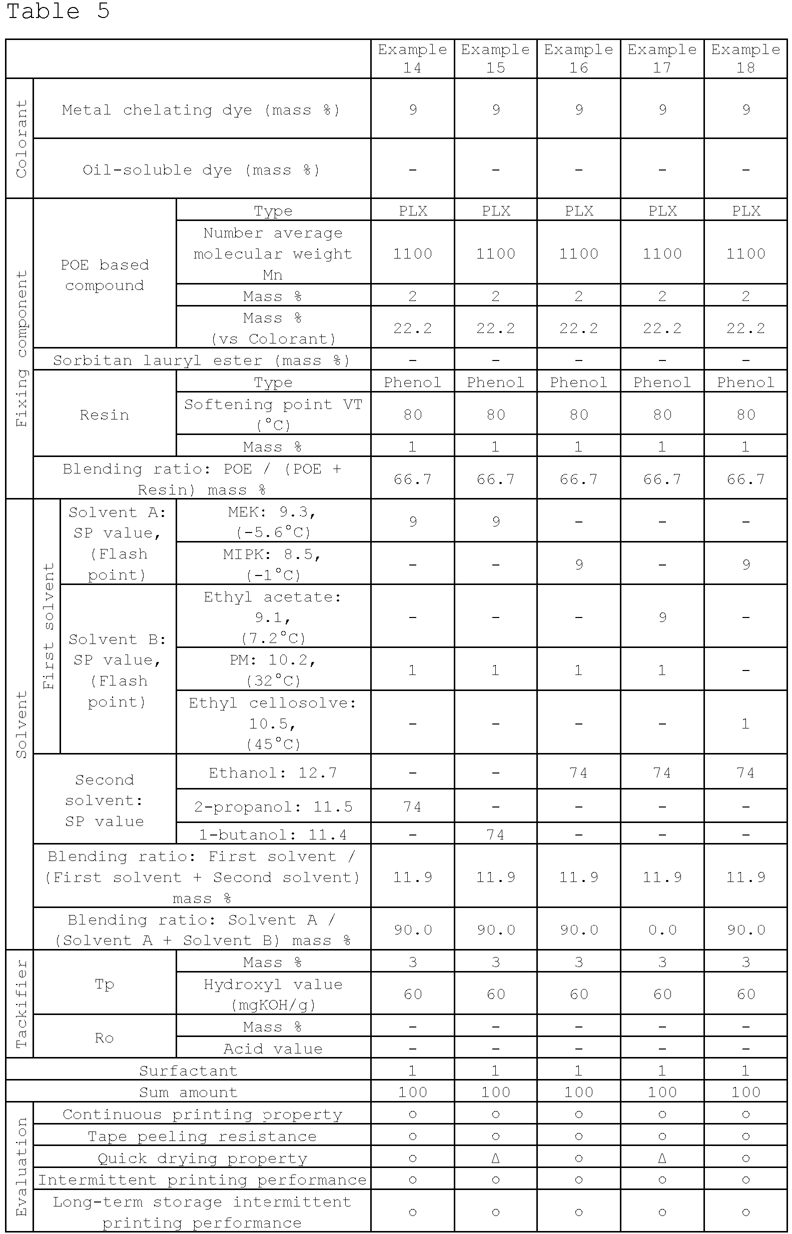

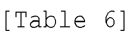

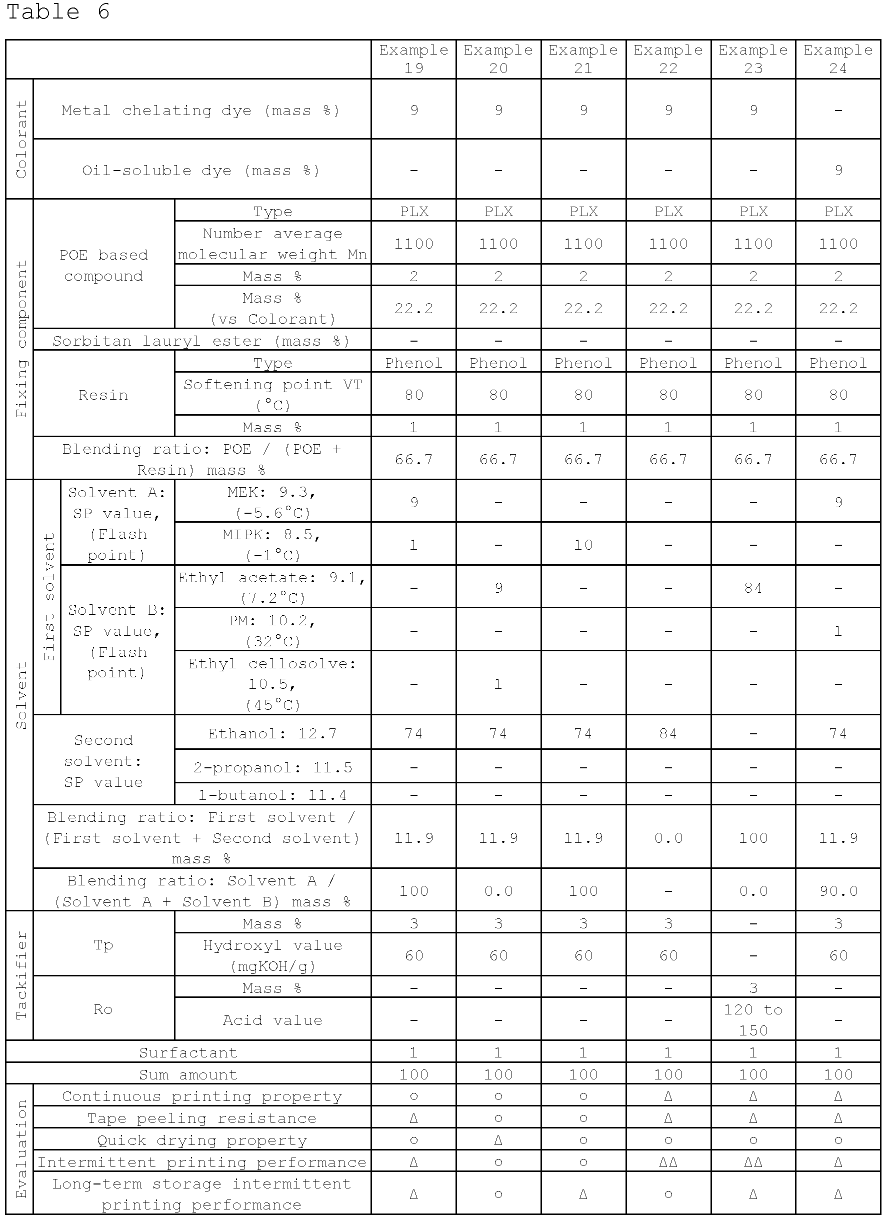

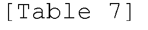

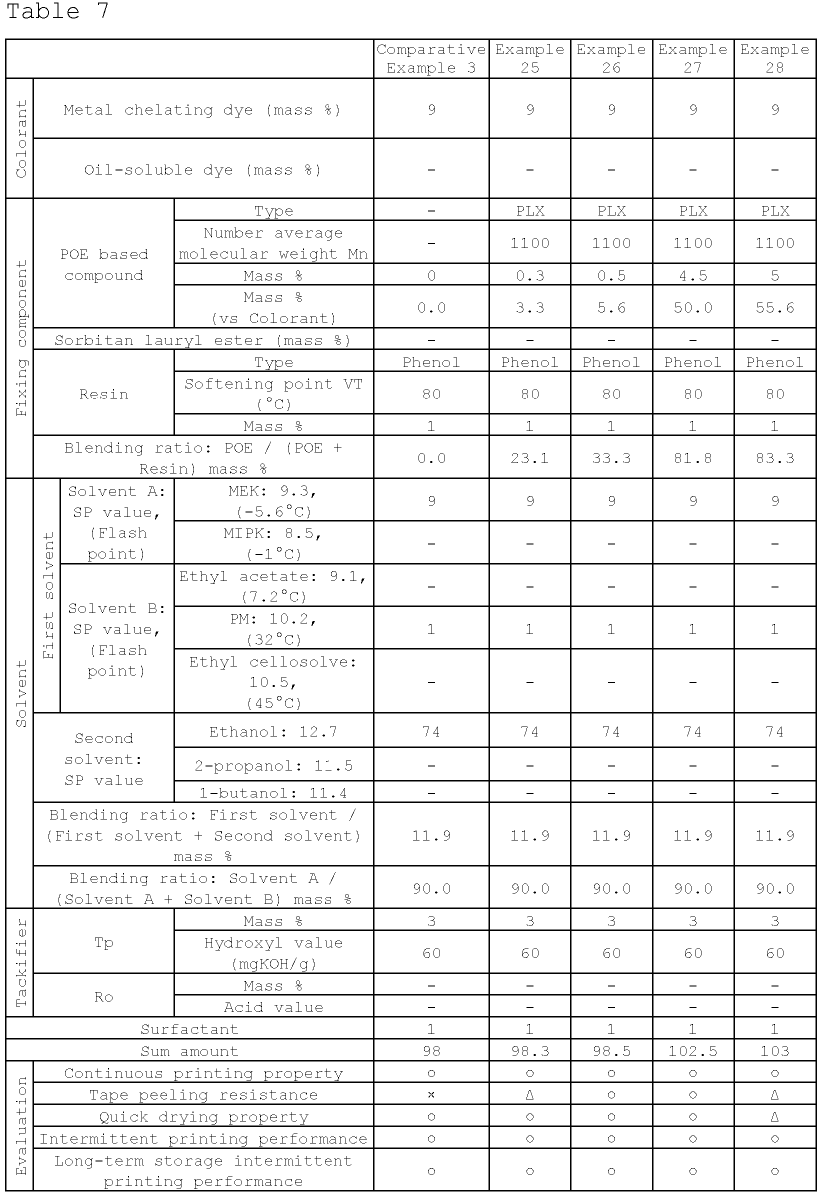

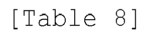

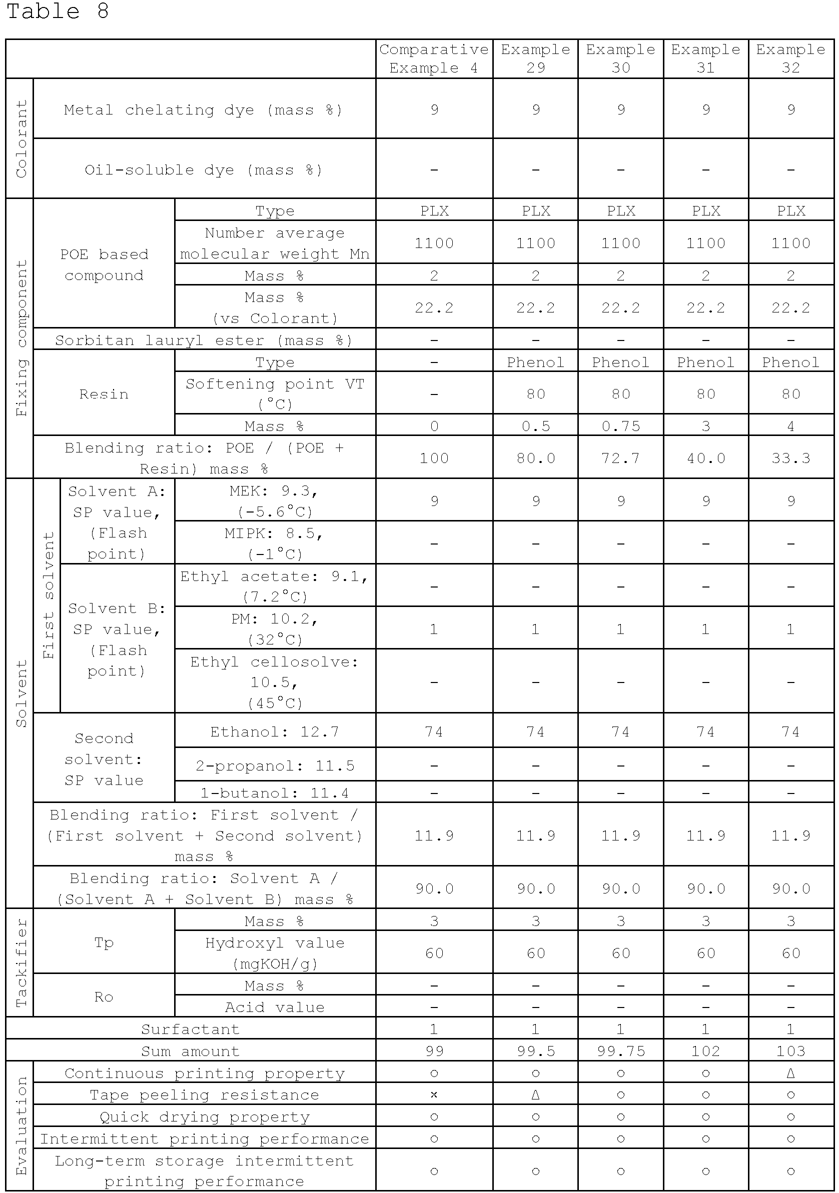

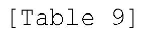

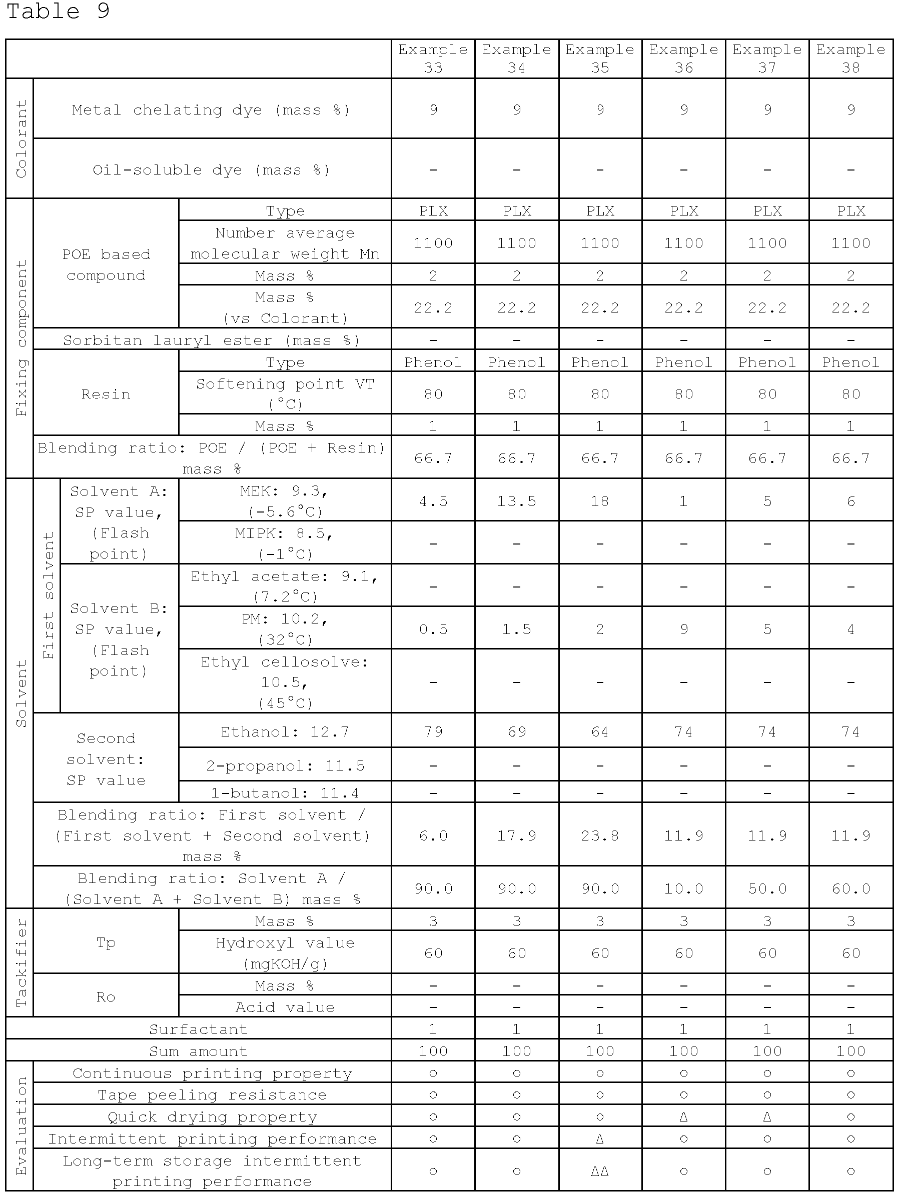

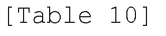

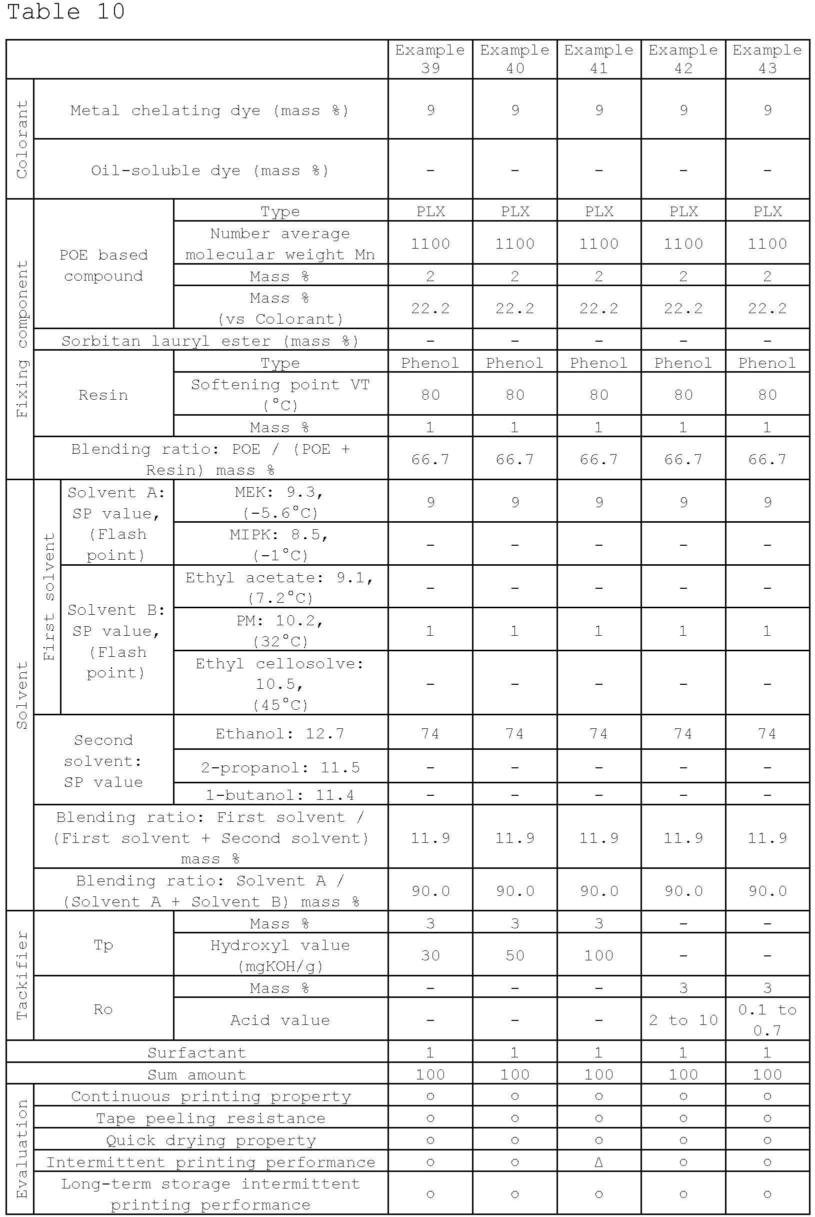

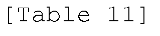

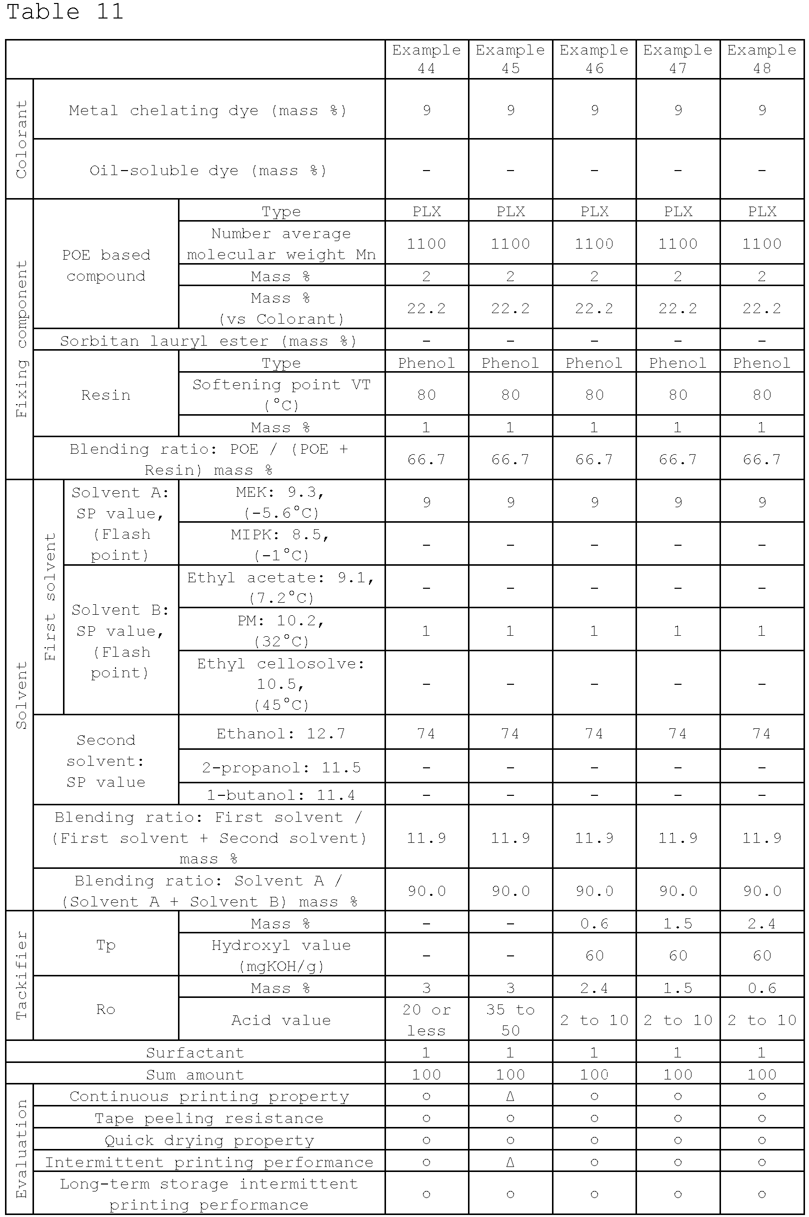

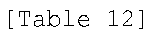

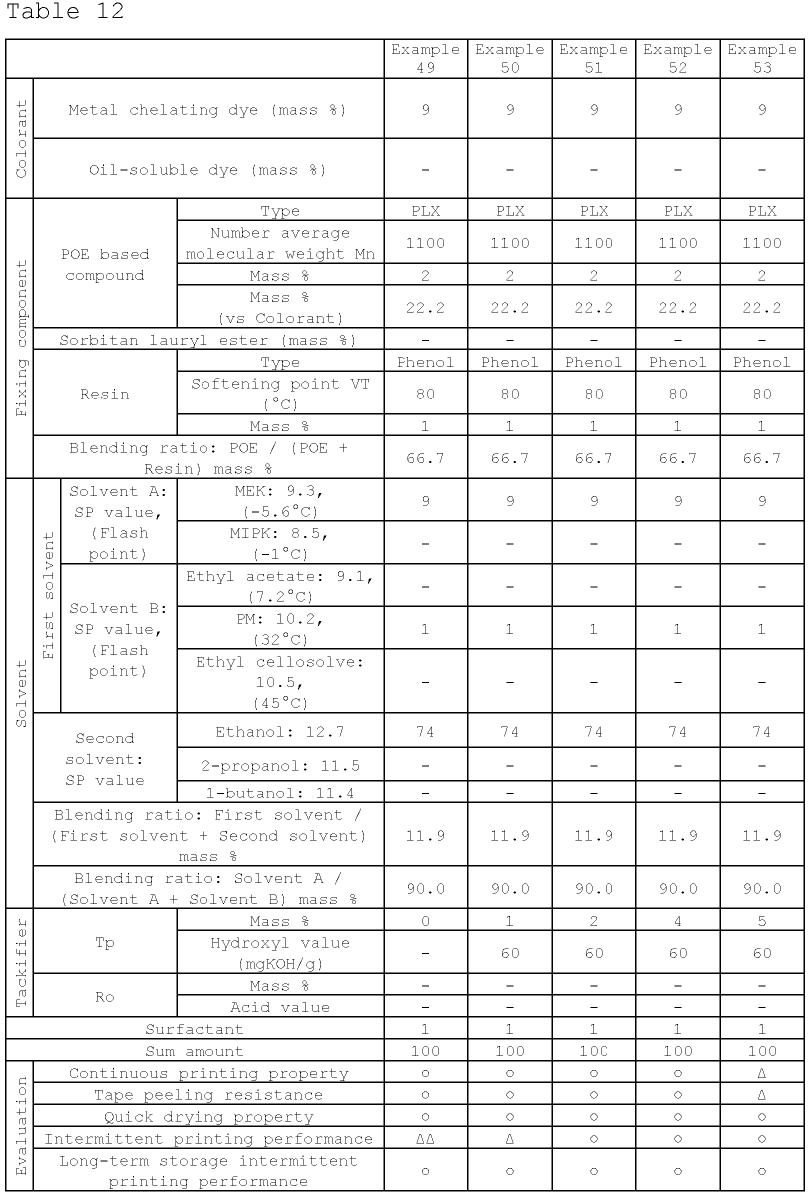

### <Evaluation Results>

From the comparison of Example 1 to 5 in Table 2, Example 6 to 10 in Table 3, Example 11 to 13 in Table 4, Example 25 to 28 in Table 7, Example 29 to 32 in Table 8, Comparative Example 1 in Table 3, Comparative Example 2 in Table 4, Comparative Example 3 in Table 7, and Comparative Example 4 in Table 8, it was found that excellent fixing properties can be exhibited by using, as a fixing component in the inks, at least one type of polyoxyethylene based compound selected from a group consisting of polyoxyethylene polyalkylene glycols, polyalkylene glycols, and polyoxyethylene alkyl ethers which has a number average molecular weight Mn of not less than 200, and a phenol resin in combination.

For example, since Comparative Example 3 in Table 7 did not contain a polyoxyethylene based compound, and a phenol resin was solely used, and Comparative Example 4 in Table 8 did not contain a phenol resin, and a polyoxyethylene based compound was solely used, the tape peeling resistance was evaluated as "×" for both Comparative Examples.

The polyoxyethylene based compound is usually a compound used as a nonionic surfactant (ether type), a raw material thereof, etc. Hence, Comparative Example 1 in Table 3 is an example in which, similarly to the polyoxyethylene based compound, sorbitan lauryl ester that is generally used as a nonionic surfactant (ester type) is used as a component to be used in combination with a phenol resin.

In Comparative Example 1, the tape peeling resistance was improved to be evaluated as "o," but the continuous printing performance was evaluated as "×." This is considered to be because the solubility of the sorbitan lauryl ester with respect to an organic solvent is lower than that of the polyoxyethylene based compound. One of the causes is considered that sorbitan lauryl ester precipitates, thereby destabilizing the discharge of the inkjet ink and causing nozzle clogging, and the continuous printing performance deteriorates.

On the other hand, Comparative Example 2 in Table 4 is an example in which, as a component to be used in combination with the polyoxyethylene based compound, an acrylic resin is used as a resin component in place of the phenol resin. In Comparative Example 2, the tape peeling resistance was not improved as evaluated as "×," and the continuous printing performance was also evaluated as "×." This is considered to be because a resin other than the phenol resin does not satisfactorily function as the fixing component of the inkjet ink, and has low solubility with respect to the organic solvent.

From the comparison between Example 1 to 5 in Table 2 and Example 6 to 10 in Table 3, among the polyoxyethylene based compounds to be used in combination with the phenol resin, it was found that the polyoxyethylene based compound having a number average molecular weight Mn of not less than 1000 and not more than 4000 is preferable.

When the number average molecular weight Mn of the polyoxyethylene based compound exceeded 4000 as in Example 4 (Table 2), the solubility of the polyoxyethylene based compound with respect to the organic solvent was low, the continuous printing performance was poor as compared with Examples 1 to 3 and Examples 5 to 10, and in addition, the quick drying property was also poor.

On the other hand, when the number average molecular weight Mn of the polyoxyethylene based compound was less than 1000 as in Example 7 and Example 8 (both in Table 3), the tape peeling resistance was evaluated to be poor as compared with Examples 1 to 6 and Examples 9 and 10.

From the comparison between Examples 1 to 5 in Table 2 and Examples 6 to 10 in Table 3, among the polyoxyethylene based compounds used in combination with a phenol resin, it was found that polyoxyethylene polyalkylene glycol (Example 1 to 4) is most preferable of polyoxyethylene polyalkylene glycol, polyalkylene glycol, and polyoxyethylene alkyl ether as long as sufficient fixing properties are exhibited. In the case of polyalkylene glycol (Examples 5 to 8) or polyoxyethylene alkyl ether (Examples 9 and 10), the tape peeling resistance was evaluated as "△" or "△△." On the other hand, in Examples 1 to 4 in which polyoxyethylene polyalkylene glycol was used, the tape peeling resistance was all evaluated as "o."

From the viewpoint of improving the fixing properties, a preferable range of the amount of the polyoxyethylene based compound was found from the comparison of Examples 25 to 28 in Table 7. The preferable range may be a range in which the amount of the polyoxyethylene based compound is not less than 5 mass % and not more than 50 mass % with respect to the metal chelating dye.

For example, as in Example 25, if the amount of the polyoxyethylene based compound is small with respect to the amount of the metal chelating dye, it becomes difficult to form a complex with the metal chelating dye, and the fixing properties with respect to the surface of the printing object deteriorate in some cases. As a result, it is considered that the tape peeling resistance was evaluated as "△." As in Example 28, when the amount of the polyoxyethylene based compound is excessive with respect to the amount of the metal chelating dye, the compound is less likely to remain at an interface with the printing object, and the fixing properties with respect to the surface of the printing object deteriorate in some cases. In addition, the quick drying property deteriorates in some cases. As a result, it is considered that both the tape peeling resistance and the quick drying property were evaluated as "△."

Also, from the comparison of Examples 27 and 28 of Table 7 and Examples 29 to 32 of Table 8, it was found that, when a total amount of the polyoxyethylene based compound and the phenol resin (the total amount of the fixing components) is not less than 2 mass % and not more than 6 mass % with respect to a total amount of the inkjet ink, the amount of the polyoxyethylene based compound is preferably not less than 35 mass % and not more than 75 mass % with respect to the total amount of the fixing components.

From the comparison between Example 1 in Table 2 and Examples 11 to 13 in Table 4, it was found that the softening point of the phenol resin is preferably not lower than 65°C and not higher than 125°C. In Example 13 in which the softening point of the phenol resin was 130°C, the solubility with respect to the organic solvent was low, and the long-term storage intermittent printing performance was evaluated as "△."

From comparison of Example 1 in Table 2 and Examples 22 and 23 in Table 6, it was found that the first solvent (SP value < 11) and the second solvent (alcohol having SP value ≥ 11) are preferably used in combination as the organic solvent. When the first solvent was solely used as in Example 23, all of the test results except for the result of the quick drying property were evaluated as "△" or "△△." Also, when the second solvent of Example 22 was solely used, all of the test results were evaluated as "△" or "△△" except for the quick drying property and the long-term storage intermittent property.

Even when the first solvent and the second solvent are used in combination, particularly, it is preferable that the blending ratio of the first solvent with respect to the total amount of the organic solvent is not more than 20 mass %. This is derived from the comparison of Examples 33 to 35 in Table 9. In Example 35 in which the blending ratio of the first solvent with respect to the total amount of the organic solvents was 23.8 mass %, the intermittent printing performance was evaluated as "△," and the long-term storage intermittent printing performance was evaluated as "△△." It is considered that ,when the amount of the first solvent was large, the material convertibility (the material compatibility, of the inkjet ink with a member forming the head, etc., of the inkjet printer, etc.) deteriorated, and the intermittent printing performance and the long-term storage intermittent printing performance were deteriorated.

The first solvent (SP value < 11) preferably contains the solvent A having a relatively low flash point and the solvent B having a flash point relatively higher than the flash point of the solvent A. In particular, the blending ratio of the solvent A with respect to the total amount of the first solvent is preferably higher than a blending ratio of the solvent B with respect to the total amount of the first solvent. From the comparison of Example 1 in Table 2 and Examples 36 to 38 in Table 9, it was found that the blending ratio of the solvent A with respect to the first solvent is preferably at least more than 50 mass % and not more than 95 mass %.

In each of Example 1 (blending ratio of solvent A = 90 mass %) and Example 38 (blending ratio of solvent A = 60 mass %) in which MEK as the solvent A and PM as the solvent B are used and Example 38 (blending ratio of solvent A = 60 mass %), the quick drying property was evaluated as "∘." On the other hand, in Example 36 (blending ratio of solvent A = 10 mass %) and Example 37 (blending ratio of solvent A = 50 mass %), the quick drying property was evaluated as "△." This is considered to be because the solvent B having a relatively low flash point has lower volatility than that of the solvent A.

When the improvement in quick drying property is taken into consideration, sole use of a single compound having a flash point of lower than 0°C is considered. However, as is apparent from Example 21 in Table 6, when the organic solvent having a flash point of lower than 0°C was solely used, the long-term storage intermittent printing performance was evaluated as "△." This is considered to be because, when the solubility is high and a flash point is low due to sole use, the solvent volatilizes near the nozzle or from the ink pack during long-term storage, and a balance change of the solvent occurs in the ink pack. It is considered that a dissolved state of a component is changed due to a balance change of the solvent, and a discharge problem occurs at the time of reprinting.

Further, from the comparison of Example 1 in Table 2, Examples 16 to 18 in Table 5, and Examples 19 and 20 in Table 6, it was found that the flash point of the solvent A is preferably lower than 0°C and the flash point of the solvent B is preferably not lower than 0°C.

For example, in Example 17 (in combination of solvents having flash points of 7.2°C and 32°C, respectively) in Table 5 and Example 20 (in combination of solvents having flash points of 7.2°C and 45°C, respectively) in Table 6, the quick drying property was evaluated as "△." This is considered to be because the flash points of the solvents used in combination are both not lower than 0°C and the volatility is low.

On the other hand, in Example 19 (respectively in combination of solvents having flash points of -5.6°C and -1°C) in Table 6, while the quick drying property was improved, all of the tape peeling resistance, the intermittent printing performance, and the long-term storage intermittent printing performance were evaluated as "△." This is considered to be because, as in Example 21 (solely using a solvent having a flash point of -1°C) in Table 6, the amount of the solvent capable of dissolving the fixing component in the ink is significantly changed due to volatilization over a long period of time, and the dissolution of the fixing component cannot be stably maintained. In particular, in Example 19, since the blending ratio of MEK having a flash point of -5.6°C with respect to the total amount of the first solvent was as large as 90 mass %, it is considered that the solvent was dried too quickly in a fixing process after printing to cause the fixing properties to be insufficient, and the tape peeling resistance also deteriorated.

From the comparison of Example 1 in Table 2 and Example 24 in Table 6, it was found that a dye contained in the ink is preferably the metal chelating dye. In Example 24 in which an acid dye was used despite being an oil-soluble dye, all of the tests except for the quick drying property were evaluated as "△."

From the comparison of Example 1 in Table 2, Examples 39 to 43 in Table 10, Examples 44 to 48 in Table 11, and Examples 49 to 53 in Table 12, it was found that the ink preferably further includes a tackifier which is at least one type selected from the group consisting of terpene phenol resins and rosin esters.

For example, in Example 49 in Table 12 in which no tackifier is used, the intermittent printing performance was evaluated as "△△." On the other hand, in Example 1 of Table 1, Examples 39 to 43 in Table 10, Examples 44 to 48 in Table 11, and Examples 50 to 53 in Table 12 in which even a small amount of the tackifier was contained, the intermittent printing performance was evaluated as "o" or "△."

In particular, from the comparison of Example 1 in Table 2 and Examples 50 to 53 in Table 12, the amount of the tackifier is preferably not less than 1.5 mass % and not more than 4.5 mass % with respect to the total amount of the inkjet ink. When the amount of the tackifier was smaller than 1.5 mass % as in Example 50, the intermittent printing performance was evaluated as "△." On the other hand, when the amount of the tackifier exceeds 4.5 mass % as in Example 53, the tape peeling resistance deteriorates (the tape peeling resistance is evaluated as "△"), this deterioration causes kogation as in the case of the resin, and the continuous printing performance deteriorates.

Further, from the comparison of Example 1 in Table 2, Examples 39 to 43 in Table 10, and Examples 44 and 45 in Table 11, it was found that, when the tackifier is a terpene phenol resin, the hydroxyl value is preferably not less than 30 mg KOH/g and not more than 70 mg KOH/g, and when the tackifier is a rosin ester, the acid value is preferably not less than 0.1 and not more than 20.

In Example 41 in which the terpene phenol resin having a hydroxyl value exceeding 70 mg KOH/g was used, the intermittent printing performance was evaluated as "△." This is considered to be because the solubility of the rosin ester not only in the solvent but also in water was increased, a difference in solubility between the solvent and water was reduced, and the rosin ester did not contribute to the intermittent printing performance. On the other hand, in the case of using a terpene phenol resin having a hydroxyl value of less than 30 mg KOH/g or a rosin ester (Example 45) having an acid value exceeding 20, the continuous printing performance and the intermittent printing performance were evaluated as "△." This is considered to be because, since the polarity of the tackifier was too high, resolubility of the tackifier with respect to both the solvents of the first solvent and the second solvent was insufficient, and the continuous printing performance deteriorated. Also, similarly to the case of using a terpene phenol resin having a hydroxyl value exceeding 70 mg KOH/g, it is considered that since the solubility in water is high and a satisfactory film cannot be formed, the intermittent printing performance deteriorated.

Also, from the comparison of Example 1 in Table 2, Example 42 in Table 10, and Examples 46 to 48 in Table 11, it was found that combined use of a terpene phenol resin and a rosin ester is also possible. When these Examples in which the total amount of the tackifier was the same were compared, all of the test results were evaluated as "o" in any case of using the terpene phenol resin solely (Example 1), using the rosin ester solely (Example 42), or using the terpene phenol resin and the rosin ester in combination (Examples 46 to 48).

Moreover, as is apparent from the results of Examples 46 to 48, the blending ratio of the terpene phenol resin (rosin ester) with respect to the total amount of the tackifier has a relatively high degree of freedom even when the blending ratio is not particularly finely set. In Examples 46 to 48, the blending ratio of the terpene phenol resin (rosin ester) with respect to the total amount of the tackifier was in a wide range of not less than 20 mass % and not more than 80 mass %, but over the entire range, all of the test results were evaluated as "∘." From these results, the blending ratio of the terpene phenol resin (rosin ester) with respect to the total amount of the tackifier when the terpene phenol resin and the rosin ester are used in combination can be set in a wide range exceeding 0 mass % and less than 100 mass %.

Although the features of the present invention have been described above on the basis of Examples and Comparative Examples, the description will be added as an overview.

As described above, it was found that by combining, as a fixing component of an ink, a polyoxyethylene based compound generally used as a nonionic surfactant and a phenol resin, the fixing properties that withstand a tape peeling test are exhibited.

The phenol resin has the relatively favorable fixing properties to a base member such as OPP or aluminum with a non-absorbing property, but when sufficient fixing properties are required, a blending amount of the resin is increased, and the continuous printing performance deteriorates. On the other hand, with the blending amount of the resin for satisfactorily maintaining the continuous printing performance, the fixing properties deteriorate. That is, when the phenol resin is solely used, improvement of the continuous printing performance and improvement of the fixing properties are in a contradictory relationship, and it is difficult for both the continuous printing performance and the fixing properties to be compatibly improved only by increasing or decreasing the blending amount.

Hence, by using a polyoxyethylene based compound and a phenol resin in combination as a material contributing to the fixing properties of the ink, the fixing properties can be maintained while the blending amount of the resin that causes kogation and affects the continuous printing performance is reduced.

Regarding the use of the solvent A and the solvent B in combination in the first solvent, since a solvent having an SP value of less than 11 causes deterioration of the material compatibility of the inkjet ink while satisfactorily dissolving the phenol resin and the polyoxyethylene based compound, it is preferable to reduce the blending amount of such solvent. Hence, the solvent A and the solvent B having SP values of less than 11 are used respectively in combination, and the solvent A having a low flash point is blended in more than the solvent B having a high flash point. Consequently, it was found that, while the total amount of the first solvent having an SP value of less than 11 was reduced, the quick drying property was maintained and the long-term storage stability (stability) was improved.

It was also found that, by using the tackifiers in combination and thus a very thin film of the tackifier is formed at the decap time, the intermittent printing performance was improved. Further, it was found that, when the first solvent having an SP value of less than 11, the alcohol based second solvent, and the tackifier were used in combination, both the long-term storage stability (stability) and the decap performance were achieved, and the decap performance was maintained even after long-term storage.

## Claims

1. An inkjet ink comprising:
a dye;
at least one type of polyoxyethylene based compound selected from a group consisting of polyoxyethylene polyalkylene glycols, polyalkylene glycols, and polyoxyethylene alkyl ethers which has a number average molecular weight Mn of not less than 200;
a phenol resin; and
an organic solvent.

2. The inkjet ink according to claim 1, wherein
the organic solvent includes a first solvent having a solubility parameter (SP value) of less than 11 and a second solvent that is an alcohol having a solubility parameter (SP value) of not less than 11, and
a blending ratio of the first solvent with respect to a total amount of the organic solvent is not more than 20 mass %.

3. The inkjet ink according to claim 2, wherein
the first solvent includes a solvent A having a relatively low flash point and a solvent B having a flash point relatively higher than the flash point of the solvent A, and
a blending ratio of the solvent A with respect to a total amount of the first solvent is higher than a blending ratio of the solvent B with respect to the total amount of the first solvent.

4. The inkjet ink according to claim 3, wherein a flash point of the solvent A is lower than 0°C, and a flash point of the solvent B is not lower than 0°C.

5. The inkjet ink according to claim 3 or 4, wherein
the solvent A is at least one type selected from a group consisting of 2-butanone (methyl ethyl ketone (MEK)), acetone (dimethyl ketone), and 3-methyl-2-butanone (methyl isopropyl ketone (MIPK)), and
the solvent B is at least one type selected from a group consisting of 1-methoxy-2-propanol (propylene glycol monomethyl ether (PM)〉, 2-ethoxyethanol (ethyl cellosolve (EGMEE)), and ethyl acetate (ethyl acetate).

6. The inkjet ink according to any one of claims 1 to 5, further comprising a tackifier that is at least one type selected from a group consisting of terpene phenol resins and rosin esters.

7. The inkjet ink according to claim 6, further comprising a tackifier that is at least one type selected from a group consisting of terpene phenol resins having a hydroxyl value of not less than 30 mg KOH/g and not more than 70 mg KOH/g and rosin esters having an acid value of not less than 0.1 and not more than 20.

8. The inkjet ink according to claim 7, wherein an amount of the tackifier is not less than 1.5 mass % and not more than 4.5 mass % with respect to a total amount of the inkjet ink.

9. The inkjet ink according to any one of claims 1 to 8, wherein the polyoxyethylene based compound has a number average molecular weight Mn of not less than 1000 and not more than 4000.

10. The inkjet ink according to any one of claims 1 to 8, wherein the polyoxyethylene based compound is a polyoxyethylene polyalkylene glycol having a number average molecular weight Mn of not less than 200.

11. The inkjet ink according to any one of claims 1 to 10, wherein the phenol resin has a softening point of not lower than 65°C and not higher than 125°C.

12. The inkjet ink according to any one of claims 1 to 11, wherein
the dye is a metal chelating dye, and
an amount of the polyoxyethylene based compound is not less than 5 mass % and not more than 50 mass % with respect to an amount of the metal chelating dye.

13. The inkjet ink according to claim 12, wherein
a total amount of the polyoxyethylene based compound and the phenol resin is not less than 2 mass % and not more than 6 mass % with respect to a total amount of the inkjet ink, and
an amount of the polyoxyethylene based compound is not less than 35 mass % and not more than 75 mass % with respect to a total amount of the polyoxyethylene based compound and the phenol resin.
